# EUROPÄISCHE PATENTSCHRIFT

(11) **EP 1 902 221 B1**
(45) Veröffentlichungstag und Bekanntmachung des Hinweises auf die Patenterteilung: **21.11.2018**
(21) Anmeldenummer: 06762539.2
(22) Anmeldetag: 11.07.2006
(51) Int. Cl.: B30B 1/32, F16F 9/49, F15B 1/02, F15B 15/14, F15B 21/00

(54) **KOLBEN-ZYLINDER-ANORDNUNG**
PLUNGER-CYLINDER ASSEMBLY
AGENCEMENT PISTON-CYLINDRE

(30) Priorität: 11.07.2005 DE 102005032297
(43) Veröffentlichungstag der Anmeldung: 26.03.2008
(73) Patentinhaber: LAEIS GmbH, 6868 Wecker (LU)
(72) Erfinder: HAHN, Matthias, 54439 Saarburg (DE); MANTERNACH, Volker, 54332 Wasserliesch (DE)
(74) Vertreter: Leinweber & Zimmermann
(86) Internationale Anmeldenummer: PCT/EP2006/006791
(87) Internationale Veröffentlichungsnummer: WO 2007/006557

(56) Entgegenhaltungen:
- EP-A2- 1 416 165
- DE-A1- 10 218 145
- DE-U1- 20 213 021
- DE-U1- 20 213 022
- FR-A- 1 361 239
- US-A- 4 210 064
- US-A- 4 633 758

## Beschreibung

Die Erfindung betrifft eine Kolben-Zylinder-Anordnung für eine Presse gemäß dem Oberbegriff von Anspruch 1, sowie eine eine solche Kolben-Zylinder-Anordnung aufweisende hydraulische Presse.

Kolben-Zylinder-Anordnungen dieser Art, die je nach Auslegung als Differentialzylinder oder Gleichgangzylinder bezeichnet werden, sind bekannt. Grundsätzlich werden sie in der Hydraulik wie auch in der Pneumatik eingesetzt, um Kräfte in allen denkbaren Wirkrichtungen zu übertragen. Speziell und im Rahmen dieser Erfindung sind solche Kolben-Zylinder-Anordnungen für Pressen einsetzbar. Dabei ist der Begriff Presse in diesem Zusammenhang als ein Sammelbegriff für unterschiedlich arbeitende hydraulische Pressen zu verstehen, mittels derer durch hydraulische Kraftaufbringung Produkte verschiedenster Art umgeformt oder hergestellt werden können. Beispiele für solche Pressen sind eine hydraulische Stanzpresse, eine Schlagschere, eine Presse für die Feuerfest- und Fliesenindustrie, eine Presse zur Herstellung von Salzprodukten usw.

Die Formgebung für Produkte kann dabei derart erfolgen, dass zwei Hauptachsen, von denen mindestens eine eine bewegliche Achse ist, relativ zueinander bewegt werden und somit den Umformvorgang bewirken. Bei einer Presse im Einsatzgebiet der Feuerfestindustrie wird beispielsweise loses Schüttgut durch die Relativbewegung der Hauptachsen in einer Matrize verdichtet, welche zumindest zum Teil die Form des durch den Pressvorgang hergestellten Presslings bestimmt. Im Gegensatz zu einem Stanzpress- oder Schlagschervorgang, dessen Beendigung durch den vollzogenen Stanz-Schritt- oder Abschervorgang gegeben ist, wird der Formgebungsvorgang der eben beschriebenen Presse der Feuerfestindustrie abgeschaltet, wenn entweder ein bestimmter Weg von den Achsen zurückgelegt wurde, ein bestimmter Druck in den Hauptzylindern erreicht wird oder auch, wenn diese beiden Kriterien in einem definierten Toleranzbereich liegen.

Dabei werden Kolben-Zylinder-Anordnungen der eingangs genannten Art nicht nur für die Hauptzylinder oder Haupt-Arbeitsachsen eingesetzt, sondern es können auch Nebenfunktionen vorliegen, für die ebenfalls Kolben-Zylinder-Anordnungen eingesetzt werden. Eine solche Nebenfunktion ist beispielsweise das Verfahren der Matrizenwandung der Matrize einer eben vorgestellten Presse aus dem Einsatzgebiet der Feuerfestindustrie, nachdem der Pressvorgang beendet worden ist. Es handelt sich dabei um das sogenannte Ausformen des Presslings aus der Matrize, wobei sich der Pressling gegen einen feststehenden Stempel oder einen Hauptzylinder abstützt, die Matrizenwandung durch eine von einer Kolben-Zylinder-Anordnung bewirkten Bewegung relativ zu der Hauptarbeitsachse verfahren wird und so die Matrize von dem Pressling entfernt wird.

Der Ausformvorgang kann dabei, je nach Anordnung der Nebenzylinder bezüglich der Presse, durch eine Wirkrichtung in Richtung der ausfahrenden oder in Richtung der einfahrenden Kolbenstange des Nebenzylinders erfolgen. Selbstverständlich ist es auch möglich, bei festgehaltener Matrizenwandung den Pressling durch eine Bewegung eines Hauptzylinders auszuformen.

Es hat sich allerdings herausgestellt, dass solche Kolben-Zylinder-Anordnungen der eingangs genannten Art bezüglich ihrer Dauerhaftigkeit bei normal üblicher technischer Auslegung nur wenig zufriedenstellend sind, da nach relativ kurzer Betriebszeit Schäden an den Zylindern selbst, z. B. den Schweißnähten, weiteren mit der Kolben-Zylinder-Anordnung gekoppelten Bauteilen wie Wegerfassungssystemen oder Leitungssystemen, sowie diverse weitere mechanische Beschädigungen auftreten. Die so beobachtete wenig zufriedenstellende Lebensdauer der Kolben-Zylinder-Anordnung und weiterer Bauteile hat zur Folge, dass die entsprechenden Teile verstärkt ausgelegt werden müssen, da sonst die Teile kostspielig repariert oder ausgetauscht werden müssen, und ggf. die Presse während der Reparaturarbeiten nicht betrieben werden kann, somit also Produktionsausfälle entstehen.

Es ist versucht worden, dieses Problem dadurch zu beheben, dass in die an die Kolben-Zylinder-Anordnung angeschlossenen Leitungssysteme Dämpfer wie etwa hydropneumatische Schockabsorber eingebaut worden sind. Solche Maßnahmen hatten allerdings nicht den erwünschten Erfolg.

In der US 2 815 004 ist eine pneumatische Baumschere offenbart, bei der der Rückstoß eines in einem Zylinder angeordneten Kolbens durch die kombinierte Wirkung eines in dem Zylinder gebildeten Luftkissens und einer an dem Kolben befestigten Federeinrichtung abgedämpft wird.

In der GB 1 563 847 ist eine Vorrichtung zur Herstellung eines instantanen Drucks auf ein Arbeitsstück offenbart. Dabei beinhaltet die dort offenbarte Vorrichtung eine Kolben-Zylinder-Anordnung, bei der ein dem Arbeitsstück abgewandter Teilraum des Zylinder-Innenraums mit einem Gas gefüllt ist, welches durch eine instantane Volumenausdehnung über den Kolben der Einrichtung einen instantanen Druck auf das Arbeitsstück ausüben kann. Diese instantane Expansion wird möglich, indem ein vorgesteuertes Druckentlastungsventil einen instantanen Druckabfall in dem dem gasgefüllten Teilraum entgegengesetzten Teilraum des Zylinders bewirkt.

Die EP 0 186 002 A1 offenbart eine Einrichtung zur Druckspitzenverhinderung in dem Pressaggregat einer Druckgießmaschine. Bei der Druckgießmaschine ist ein Presszylinder mit einem Presskolben vorgesehen, wobei innerhalb des Presskolbens ein in Achsrichtung des Presskolbens verschiebbarer Hilfskolben angeordnet ist. Während einer Ausstoßbewegung des Presskolbens bei einer Formfüllphase wird durch Abbremsen des Presskolbens bei Beginn der Nachdruckphase eine Druckerhöhung in dem kolbenflächenseitig im Presszylinder enthaltenen Hydraulikfluid bewirkt. Die auf diese Weise beim Übergang zur Nachdruckphase auftretenden Druckspitzen werden durch eine Bewegung des in dem Presskolben eingesetzten Hilfskolbens vermieden. Dazu ist eine Anschlußleitung durch den Presskolben zu einer hinter dem Hilfskolben gelegenen zylindrischen Führung angelegt.

In der US 3 536 128 ist ein Einspritzaufbau für eine Druckgießmaschine offenbart, bei der ein Einspritzkolben über eine fluidgefüllte Dämpfungskammer an einen hydraulischen Stempel gekoppelt ist. Dabei ist die Dämpfungskammer in einem Zylinder zwischen Einspritzkolben und hydraulischem Stempel angeordnet. In einer ersten Phase bewegen sich diese beiden Kolben beide mit gleicher Geschwindigkeit auf die Form zu. Beim Auftreffen auf die gefüllte Form erfährt der Einspritzkolben einen Widerstand, und seine auf die Form gerichtete Bewegung wird abgebremst. Dadurch wird in der Dämpfungskammer eine Druckerhöhung bewirkt, der entgegengetreten wird, indem dem in der Dämpfungskammer befindlichen Fluid erlaubt wird, die Dämpfungskammer zu verlassen, welche bei diesem Vorgang volumenmäßig schrumpft. Dabei kann das Fluid durch Einrichtungen entweichen, die sich entweder innerhalb des hydraulischen Stempels oder innerhalb des Einspritzkolbens befinden.

EP 1 416 165 A2 offenbart einen pneumatischen Stellantrieb mit einer Kolben-Zylinder-Anordnung, bei dem die axiale Bewegung des Kolbens mittels einer pneumatischen Dämpfungseinrichtung gedämpft wird.

US 4,633,758 offenbart eine Kolben-Zylinder-Einrichtung mit einer Brems- und Dämpfungseinrichtung zum punktgenauen Abbremsen des Kolbens an jeglicher erwünschter Zwischenstellung in dem Zylinder.

US 4,210,064 offenbart eine Kolben-Zylinder-Anordnung mit einer Dämpfungseinrichtung zum Abbremsen des Kolbens an einem Ende des Zylinders, die auf einer effektiven Vergrößerung der Druckfläche des Kolbens beruht.

US-A-3 893 377 offenbart einen hydraulischen Servomotor mit einem durch eine Membran begrenzten Speicher am kolbenstangenseitigen Ende des Hydraulikzylinders.

JP-A-2003343516 offenbart einen damit vergleichbar aufgebauten Stoßdämpfer zum Einsatz beim Raupenantrieb eines Schaufelbaggers.

GB-A-2407624 offenbart einen hydropneumatischen Schockabsorber, der nach dem oben bereits erläuterten Prinzip in die an die Kolben-Zylinder-Anordnung angeschlossenen Leitungssysteme eingebaut ist, wobei allerdings der Schockabsorber selbst innerhalb der Kolbenstange angeordnet ist.

US-A-4 052 850 offenbart einen Schlaggenerator, dessen Gleitkolben und Arbeitskolben einen Stoß über eine hydraulische Achse gekoppelt ausführen.

Angesichts dieses oben beschriebenen, im Stand der Technik bestehenden Problems liegt der Erfindung die Aufgabe zugrunde, eine Kolben-Zylinder-Anordnung der eingangs genannten Art bereitzustellen, die bei Einsatz in einer Presse einerseits selbst eine erhöhte Dauerhaftigkeit aufweist, aber auch die Dauerhaftigkeit anderer an die Kolben-Zylinder-Anordnung angeschlossener Bauteile erhöht und somit eine längere Lebensdauer dieser Teile der Presse ermöglicht.

Diese Aufgabe wird überraschend einfach durch die im kennzeichnenden Teil des Anspruchs 1 angegebenen Merkmale gelöst.

Dabei liegt der Idee zu dieser Erfindung eine genaue und ausführliche Analyse der dynamischen Druckverhältnisse im gesamten, die Kolben-Zylinder-Anordnung beinhaltenden hydraulischen System zugrunde. Als Ergebnis dieser Analyse ist erkannt worden, dass mechanische Belastungen für die wenig zufriedenstellende Dauerhaftigkeit herkömmlicher Kolben-Zylinder-Anordnungen verantwortlich sind, welche wiederum durch mechanische Schwingungsanregungen des gesamten hydraulischen Systems verursacht werden. Diese mechanischen Schwingungsanregungen können entstehen, wenn ein in einem der Teilräume aufgenommenes Fluid durch Bewegen des Kolbens längs der Zylinderachse auf den Teilraum zu einer Druckerhöhung ausgesetzt ist, und ein Entweichen des Fluids in das angeschlossene Leitungssystem aufgrund dieser Druckerhöhung einen Strömungswiderstand darstellt. Dann entsteht eine Druckspitze in dem angeschlossenen hydraulischen System, welche der diese Druckerhöhung bewirkenden Bewegung des Kolbens entgegengesetzt wirkt. Mit einer auf diese Weise hervorgerufenen der sie verursachenden Kraft entgegenwirkenden Kraft entsteht eine Schwingungsanregung, mit einer entsprechend hohen mechanischen Belastung für die gesamte Maschine.

Bei einer erfindungsgemäßen Kolben-Zylinder-Anordnung sorgt dagegen die in diesem Teilraum angeordnete Entlastungseinrichtung dafür, dass der Druckerhöhung entgegengewirkt wird, so dass diese keine oder zumindest eine nur kleinere Druckspitze zur Folge haben kann, und somit auch keine oder zumindest nur eine schwächere Schwingungsanregung erfolgen kann. Mit anderen Worten wird die Druckerhöhung in dem Raum aufgefangen, in dem sie entsteht, bevor sie gefährliche Druckspitzen zur Folge haben kann.

Zur weiteren Verdeutlichung der Wirkungsweise der erfindungsgemäßen Kolben-Zylinder-Anordnung wird das oben betrachtete Beispiel einer Presse im Einsatzgebiet der Feuerfestindustrie wieder aufgegriffen, und obige Analyse anhand dieses Beispiels erläutert. Dabei soll die Kolben-Zylinder-Anordnung für eine Nebenfunktion zum Ausformen eines Pressguts aus einer formgebenden Matrize eingesetzt werden, indem sie eine Matrizenwandung verfährt.

Zunächst ist zu betrachten, dass die Kräfte, welche beim Einsatz einer solchen Presse im Formgebungsbereich wirken, im Größenbereich von 4000 kN bis 36000 kN liegen. Wird loses Schüttgut in der Matrize durch den Einsatz solcher Kräfte verdichtet und in Form gebracht, entsteht auch quer zur Haupt-Arbeitsachse ein hoher Druck auf die Seitenwände der Matrize, bzw. das Schüttgut wird mit großen Kräften quer zur Haupt-Arbeitsachse gegen die Seitenwände der Matrize gepresst. Zwischen dem Pressling (verpresstem Schüttgut) und der Matrizenwandung besteht, auch nach Beendigung des Umformvorgangs, eine entsprechend hohe Haftreibung. Diese muss beim Ausformen des Presslings von der Kolben-Zylinder-Anordnung überwunden werden, es ist also zum Verfahren der Matrizenwandung eine vergleichsweise hohe Kraft erforderlich.

Die genaue Höhe der zum Überwinden der Haftreibung benötigten Kraft ist allerdings nicht genau berechenbar, da sie von sehr vielen Parametern abhängt, beispielsweise von dem verpressten Material, von der Anzahl der Kavitäten in der Matrize, von der Presskraft, von den Abmessungen des Presslings (der Oberfläche, welche mit der Matrizenwandung in Berührung steht) usw.

Entsprechend dieser zum Ausformen benötigten unbekannten Kraft erfolgt auch das übliche Verfahren zum Ausformen des Presslings. Dazu wird in einem (zweiten) Teilraum des Zylinders, beispielsweise kolbenseitig, relativ langsam ein Druck aufgebaut, der beim Erreichen einer kritischen Größe ausreichend ist, die zum Überwinden der Haftreibung benötigte Kraft über die Kolben-Zylinder-Anordnung auf die Matrizenwandung wirken zu lassen. Mit Überwindung der Haftreibung erfolgt schlagartig der Übergang von der Haftreibung zur Gleitreibung, der Kolben bewegt sich und der Ausformvorgang des Presslings wird dadurch eingeleitet.

Durch die Bewegung des Kolbens wird allerdings eine Druckerhöhung in dem anderen (ersten) Teilraum, genauer gesagt in dem dort aufgenommenen Fluid, bewirkt. Der Grund für diese Druckerhöhung ist, dass sich während des Druckaufbaus auf der Kolbenseite bzw. in dem auf der Kolbenseite aufgenommenen Fluid in dem unter Druck stehenden Volumen des Zylinderraums auf der Kolbenseite ein definiertes Kompressionsvolumen gebildet hat. Die in sehr kurzer Zeit erfolgende Entspannung dieses Kompressionsvolumens sorgt für eine Bewegung des Kolbens in Richtung des Zylinder-Ringflächenraums, welche in diesem Raum eine Druckerhöhung bewirkt. Infolge der Druckerhöhung wird die Achse, d. h. das in diesem Zylinder-Ringflächenraum aufgenommene Fluid sehr stark in Richtung der ausfahrenden Kolbenstange beschleunigt. Dabei können sich rechnerisch Beschleunigungswerte von mehr als 10 g ergeben. Der mit dieser Beschleunigung einhergehende Volumenstrom des Fluids wird üblicherweise auf ein geschlossenes Druckbegrenzungsventil mit einem eingestellten Druckwert geleitet. Entsprechend dem eingestellten Druckwert wird die Achse schließlich über einen unkontrollierten Druckaufbau in dem Zylinder-Ringflächenraum abgebremst. Diese Maßnahme erfolgt allerdings nicht ausreichend "schnell", so dass durch den unkontrollierten Druckaufbau in dem Zylinder-Ringflächenraum eine Druckspitze entsteht, die auf die Ringfläche des Zylinders und damit entgegen der die ursächliche Druckerhöhung bewirkenden Bewegung gerichtet ist. Eine Schwingungsanregung mit den angesprochenen negativen Auswirkungen für die Maschine entsteht.

Verwendet man dagegen eine Kolben-Zylinder-Anordnung gemäß dieser Erfindung, wird der die Druckspitze und damit mechanische Schwingungsanregung verursachende Druckerhöhung bereits am Ort ihrer Entstehung durch die erfindungsgemäß integrierte Entlastungseinrichtung entgegengewirkt. Zumindest eine Abschwächung, wenn nicht vollständige Unterdrückung der Druckspitze wird erreicht, der Schwingungsanregung entgegengewirkt und somit die Dauerhaftigkeit der Kolben-Zylinder-Anordnung erhöht, sowie durch Verringerung der mechanischen Belastung auf das gesamte hydraulische System auch die Dauerhaftigkeit von angeschlossenen Bauteilen wie einem Wegerfassungssystem oder Leitungssystemen erhöht.

Aufgrund des eben Erläuterten wird auch verständlich, warum, bei normaler technischer Auslegung, die bisherigen Versuche zur Verbesserung der Dauerhaftigkeit der Kolben-Zylinder-Anordnung fehlgeschlagen sind. Das Druckbegrenzungsventil ist zu langsam für einen derart dynamischen Vorgang. Auch gibt es nach heutigem Stand der Technik keine Sensorik, die überhaupt in der Lage ist, die auftretenden schnellen Bewegungsabläufe in entsprechende Schaltbewegungen umzuwandeln. In das Leitungssystem eingebaute Dämpfer sind nicht voll wirksam, da die Eigenfrequenz des Zylinder-Leitungssystems durch den mit der Verrohrung einhergehenden Leitungswiderstand verringert ist. Außerdem sind die bisher verwendeten Pulsationsdämpfer für den hier angesprochenen Vorgang immer noch zu langsam.

Ein weiterer Vorteil der erfindungsgemäß integrieren Entlastungseinrichtung besteht darin, dass die Entlastungseinrichtung direkt und ohne Steuerung durch Sensoren oder andere Mechanismen auf die Druckerhöhung in dem im ersten Teilraum aufgenommenen Fluid anspricht. Auf diese Weise ist ein sehr unkomplizierter und wenig anfälliger Ansprechmechanismus gewährleistet.

Allerdings ist durch das Integrieren der Entlastungseinrichtung in dem Zylinder-Innenraum der Hubraum der Kolben-Zylinder-Anordnung verringert worden. Um daher den gleichen Hub wie bei einer Kolben-Zylinder-Anordnung ohne die eingebaute Entlastungseinrichtung realisieren zu können, muss der Zylinder der Kolben-Zylinder-Anordnung bei Verwendung einer erfindungsgemäßen Entlastungseinrichtung entsprechend ein Stück länger gebaut werden.

Durch den Entlastungsraum wird dem in dem Unterraum enthaltenen Fluid im Einsatzfall ein zusätzliches Entfaltungsvolumen bereitgestellt. So wird erreicht, dass sich das Fluid auf ein größeres Volumen entfalten kann, und so der Druckerhöhung entgegenwirkend Druck abbauen kann. Die räumliche Trennung zwischen Unterraum und Entlastungsraum bleibt aufrechterhalten, so dass die Entlastungseinrichtung wieder für einen weiteren Druckentlastungszyklus bereitgemacht werden kann. Erfindungsgemäß ist der Teilbereich als gegenüber einem Referenzpunkt, wie z.B. dem Zylinder, bewegbar gelagerter Entlastungskolben ausgebildet. Da auch die Begrenzungsanordnung des Entlastungsraums hohen Drücken ausgesetzt sein wird, stellt ein Entlastungskolben ein besonders stabiles Teil der Entlastungseinrichtung dar. Dabei kann der Entlastungskolben trotz stabiler Ausführung eine geringe Masse aufweisen.

Weiter ist eine das Volumen des Entlastungsraums verkleinernde Bewegung des Entlastungskolbens von dem zweiten, diesen Entlastungskolben nicht enthaltenden Teilraum weggerichtet, also auch von dem Bereich, in dem der Kolben die Druckerhöhung bewirkt, weggerichtet. Auf diese Weise kann eine Druckentlastungshauptrichtung der Entlastungseinrichtung einer Druckschockrichtung der Druckerhöhung angepasst werden, wodurch der Druckerhöhung besonders effektiv entgegengewirkt wird.

Zur Führung der Bewegung des Entlastungskolbens ist eine Lauffläche erfindungsgemäss vorgesehen. Damit kann in zuverlässiger Weise ein Gleiten des Entlastungskolbens in der Entlastungseinrichtung sichergestellt werden.

Dabei ist es zweckmäßig, dass die Lauffläche selbst einen Teil der Begrenzungsanordnung bildet. Die Entlastungseinrichtung kann so material- und vor allem platzsparend realisiert werden.

Die Entlastungseinrichtung kann vorteilhafterweise ein Element besitzen, das eine uneingeschränkte, das Volumen des Entlastungsraums vergrößernde Bewegung des Entlastungskolbens verhindert, welches baulich einfach als Anschlagelement ausgeführt ist. Mit einem solchen Element lässt sich eine unerwünschte Bewegung des Entlastungskolbens in den Unterraum verhindern, die ansonsten bei einer entsprechenden negativen Druckdifferenz zwischen Unterraum und Entfastungsraum entstehen würde.

Zweckmäßig besitzt der Entlastungsraum eine Verbindung zur Umgebung des Zylinders. Diese Verbindung kann etwa durch eine Öffnung in einer Wand des Zylinders verlaufen. So ist ein vorteilhafter, unabhängig von dem Fluid in dem Unterraum erfolgender Zugang auf den Entlastungsraum möglich.

In einer bevorzugten Ausführungsform soll die Bewegung des Entlastungskolbens längs der Zylinderachse erfolgen. So können die vorgegebenen geometrischen Gegebenheiten besonders platzsparend ausgenutzt werden.
Gegebenenfalls kann bei dieser Konstellation ein/das vorgsehene(s) Anschlagelement auch in einer Doppelfunktion eine Bewegung des Kolbens in Richtung Entlastungsraum begrenzen. Dies ist dann der Fall, wenn keine durch die Mechanik des Maschinengestells vorgegebene Begrenzung vorhanden ist.

Zweckmäßigerweise ist die Entlastungseinrichtung nahe des entsprechenden längsseitigen Zylinderendes angeordnet. So kann besonders einfach verhindert werden, dass der Unterraum einen Engpass besitzt, der die Wirksamkeit der Entlastungseinrichtung verringern würde. Auch wird so der Hubverlust bei gleicher Entlastung minimiert.

In einer bevorzugten Ausführungsform bildet die Wand des Zylinders selbst zumindest einen Teil der Lauffläche. Auf diese Weise können die Bauteile der Kolben-Zylinder-Anordnung platz- und kostensparende Doppelfunktionen ausfüllen.

Es ist vorgesehen, den Entlastungsraum in Form eines torusartigen Zylinders auszubilden. Dabei wird unter einem torusartigen Zylinder ein Zylinder verstanden, von dem ein in radialer Richtung kleinerer und in axialer Richtung gleichlanger Zylinder ausgenommen ist, der also eine Durchgangsöffnung aufweist. Dies ist insbesondere dann vorteilhaft, wenn die Entlastungseinrichtung in einem Teilraum angeordnet ist, der auch eine Kolbenstange des Kolbens aufnimmt. Indem die Kolbenstange durch die Durchgangsöffnung des torusartigen Zylinders geführt wird, wird wiederum der verbleibende Raum optimal genutzt. Es ist vorgesehen, dass eine am Zylinderkopf angebrachte und in den Zylinder-Innenraum ragende Hülse die radial gesehene innere Lauffläche für den Entlastungskolben bildet. Damit ist die Hülse gleichzeitig auch Teil der Begrenzungsanordnung, und die Kolbenstange wird durch einen Innenraum der Hülse geführt. Dabei kann zwischen der radial gesehen inneren Hülsenwand und der Kolbenstange noch eine Schicht des in dem Unterraum enthaltenen Fluids gebildet sein. Mit einer solchen Anordnung wird vorteilhaft erreicht, dass Entlastungskolben und Kolbenstange bei ihren jeweiligen Bewegungen nicht aneinander reiben.

Die auf die Zylinderachse bezogene Querschnittsfläche des Entlastungsraums kann mehr als 20 %, bevorzugt mehr als 50 % und insbesondere mehr als 80 % der Querschnittsfläche des Zylinder-Innenraums ausmachen. Je nach Beanspruchung des Kolbens und insbesondere des dazu erforderlichen Kolbenquerschnitts sowie den zu erwartenden Druckerhöhungen kann deren Flächenverhältnis somit entsprechend gewählt werden.

Andererseits kann auch vorgesehen sein, die auf die Zylinderachse bezogene Querschnittsfläche des Entlastungsraums im Bereich von 1 bis 20 %, bevorzugt 1 bis 10 % und insbesondere 1 bis 5 % der Querschnittsfläche des Zylinder-Innenraums anzusiedeln. Eine solche Gestaltung der Kolben-Zylinder-Anordnung gestattet es in vorteilhafter Weise, dass im Umkehrschluss der von der Querschnittsfläche des Zylinder-Innenraums unabhängige Querschnitt einer Kolbenstange des Kolbens einen entsprechend großen Bereich der Querschnittsfläche des Zylinder-Innenraums von bis zu 99 % einnehmen kann. So kann trotz Entlastungseinrichtung eine hohe Stabilität des Kolbens erreicht werden. Auch wir der relative Hubraumverlust verringert.

Die Öffnung in der Zylinderwand, welche eine Verbindung der Umgebung des Zylinders zu dem Entlastungsraum herstellt, kann einem Anschluss für eine Versorgungsleitung und/oder ein Ventil und/oder ein Druckmesser dienen. So kann die Entlastungseinrichtung geeigneterweise an einen hydropneumatischen Druckkreis angeschlossen sein, mit dem der in dem Entlastungsraum herrschende Druck gesteuert bzw. gemessen wird. Auf diese Art und Weise kann auch eine Steuereinrichtung für die Entlastungseinrichtung vorgesehen sein und auf die Entlastungseinrichtung wirken. Es kann aber auch ein Zusatzvolumen an die Öffnung angeschlossen sein. Durch entsprechende Wahl des Fassungsvermögens dieses Zusatzvolumens kann ebenfalls der Druck im Entlastungsraum beeinflusst werden und so eine Drucksteuerung besonders einfach, nämlich rein mechanisch, erfolgen.

In den eben genannten Fällen eines Anschlusses weiterer, außerhalb des Zylinders angeordneter Bauteile wird die in dem Zylinder-Innenraum angeordnete Entlastungseinrichtung automatisch Teil einer größeren, sowohl in als auch außerhalb des Zylinders angeordneten Entlastungsvorrichtung. Dabei kann geeigneterweise auch eine Steuereinrichtung für die Entlastungseinrichtung Teil der Entlastungsvorrichtung sein.

Der Entlastungsraum kann mit einem Entlastungsfluid gefüllt sein. Durch Füllung mit einem solchen Fluid können in vorteilhafter Weise in dem Entlastungsraum stabile Druckverhältnisse erreicht werden. Geeigneterweise kann das Entlastungsfluid mit einem Druck oder auch Vordruck beaufschlagt sein. Auf diese Weise kann besonders vorteilhaft ein unabhängig von dem Fluid in dem Unterraum bestehender, von der Begrenzung des Entlastungsraums auf diesen einwirkenden Eigendruck kompensiert werden. Dabei kann zweckmäßigerweise der im Entlastungsfluid herrschende Druck über die Öffnung einstellbar sein. Damit ist eine Nachregulierung des Drucks in dem Entlastungsraum möglich. Weiter kann der Gegendruck mindestens so hoch eingestellt sein, wie der im Unterraum im Fluid herrschende Druck in einem vor der bewirkten Druckerhöhung bestehenden Betriebszustand. So kann vorteilhaft erreicht werden, dass nicht bereits ein Teil der Wirkung der Entlastungseinrichtung durch das Fluid im Unterraum in Anspruch genommen wird, und die Entlastungseinrichtung somit mit voller Kapazität gegen die Druckerhöhung wirkt.

In einer vorteilhaften Gestaltung der Kolben-Zylinder-Anordnung ist der Gegendruck des Entlastungsfluids um einen vorbestimmten Wert höher als der im Unterraum in dem Fluid herrschende Druck in einem vor der bewirkten Druckerhöhung bestehenden Betriebszustand eingestellt. Bei einer solchen Einstellung ist es möglich, den Kolben auf den die Entlastungseinrichtung enthaltenden Teilraum hin zu verschieben, wobei die Entlastungseinrichtung einer durch diese Bewegung verursachten Druckerhöhung nur in äußerst geringem Maße entgegenwirkt, solange in dem Fluid im Unterraum quasistatische Druckbedingungen herrschen, d. h. solange die Kolbenbewegung adiabatisch langsam erfolgt. Dies hat den großen Vorteil, dass der Kolben bezüglich dem Zylinder positioniert werden kann, was bei einem Positionierbetrieb der Presse erforderlich ist, ohne dass die Positionierbewegung durch die Entlastungseinrichtung beeinträchtigt wird (bzw. der Positionierbetrieb durch die Entlastungseinrichtung nur vernachlässigbar gering beeinträchtigt wird). Mit anderen Worten stellt die Entlastungseinrichtung bzw. der Entlastungsraum bei einer solchen Positionierbewegung lediglich einen Totraum dar.

Geeigneterweise weist das Entlastungsfluid eine hohe Kompressibilität auf. Insbesondere kann sie höher als die Kompressibilität des in dem Unterraum aufgenommenen Fluids sein. Die Wirkung der Entlastungseinrichtung hängt u.a. auch von der absoluten und relativen Kompressibilität des Entlastungsfluids ab. So kann mit dieser Gestaltung eine besonders effektive Entlastungseinrichtung bereitgestellt werden. Geeigneterweise handelt es sich bei dem Entlastungsfluid um ein Gas, insbesondere um ein inertes Gas. Dies stellt eine zufriedenstellende und auch kostengünstige Bereitstellung eines Entlastungsfluids dar.

Anstelle und/oder zusätzlich zu dem Entlastungsfluid ist in einer baulich besonders einfachen Ausführungsform vorgesehen, eine Vorspanneinrichtung in dem Entlastungsraum anzuordnen. Dabei ist insbesondere vorgesehen, die Vorspannung der Vorspanneinrichtung so groß einzustellen, daß ein Gegendruck mit den oben bereits erläuterten Eigenschaften erzeugt wird.

In einer besonders einfachen Ausführungsform weist die Vorspannungseinrichtung eine Feder auf und wird insbesondere durch sie gebildet. Insbesondere kann weiter eine Begrenzungsfläche des Entlüftungsraums derart lösbar befestigt sein, daß die Vorspanneinrichtung oder ein Teil davon ersetzt werden kann oder etwa durch eine andere Vorspanneinrichtung mit anderer Vorspann-Charakteristik ausgetauscht werden kann. Handelt es sich beispielsweise um eine Feder, kann eine Feder mit unterschiedlicher Kraft-Weg-Charakteristik bei Bedarf eingesetzt werden.

In der Kolben-Zylinder-Anordnung der Erfindung ist auch vorgesehen, in beiden Teilräumen, also zu jeder Seite des Kolbens, mindestens eine Entlastungseinrichtung anzuordnen. Dies hat den besonderen Vorteil, dass auch bei einem Betrieb, bei dem in beiden Wirkrichtungen durch die Kolbenbewegung eine Druckerhöhung in den Fluiden in beiden Teilräumen entstehen können, der jeweiligen Druckerhöhung entgegengewirkt werden kann.

Zweckmäßigerweise weist auch einer der Teilräume, insbesondere im Bereich des das Fluid enthaltenden Unterraums, oder auch beide Teilräume eine Verbindung zur Umgebung des Zylinders auf. Diese Verbindung verläuft durch eine in der Zylinderwand vorgesehene Versorgungsöffnung. Auf diese Weise kann der entsprechende Teilraum an ein hydropneumatisches System angeschlossen werden, und die Presse erhält variable Einsatzmöglichkeiten. Auch kann ein Wegerfassungssystem für die Kolbenposition vorgesehen sein. Damit wird vorteilhaft die Steuerung der Kolben-Zylinder-Anordnung, insbesondere in einem Positionierbetrieb, erleichtert.

Die Kolben-Zylinder-Anordnung kann auch als Gleichgangzylinder ausgelegt sein. Dann weist der Kolben in Richtung der Zylinderachse an jeder Seite eine Kolbenstange auf, und diese durchdringen die entsprechenden längsseitigen Enden des Zylinders. Eine solche Gestaltung erlaubt es, dass die durch die Kolbenbewegung bewirkte Druckerhöhung direkt, also ohne Kopplung über ein hydropneumatisches Medium, von einer mechanischen Belastungskraft verursachbar ist.

Gemäß einem weiteren Gesichtspunkt der Erfindung werden hydraulische Pressen vorgeschlagen, bei denen eine erfindungsgemäße Kolben-Zylinder-Anordnung eingesetzt wird. Besonders bei Pressen, die zur Herstellung von für die Feuerfestindustrie geeigneten Steinen aus losem Schüttgut herstellen, kann die erfindungsgemäße Kolben-Zylinder-Anordnung besonders vorteilhaft und erfolgreich ihre Wirkung entfalten.

Die erfindungsgemäße Kolben-Zylinder-Anordnung kann bei der hydraulischen Presse für eine Haupt-Arbeitsachse eingesetzt werden. Entlang diesen Achsen werden nämlich ggf. sehr hohe Drücke und auch hohe Druckänderungen erzeugt, was den Einsatz der erfindungsgemäßen Kolben-Zylinder-Anordnung als sinnvoll und vorteilhaft erkennen lässt.

Andererseits oder zusätzlich kann die hydraulische Presse eine erfindungsgemäße Kolben-Zylinder-Anordnung für eine Neben-Arbeitsachse einsetzen. Dies ist besonders dann zweckmäßig, wenn in Nebenzylindern beträchtliche und schlagartige Druckerhöhungen entstehen können. Besonders vorteilhaft ist es, eine hydraulische Presse mit einer erfindungsgemäßen Kolben-Zylinder-Anordnung bei einer Nebenarbeitsachse vorzusehen, bei der die Nebenzylinder zum Verfahren einer der Formgebung eines Pressguts dienenden Matrize eingesetzt wird. Wie oben schon erwähnt, entstehen hier die vorteilhaft entlastbaren Druckerhöhungen beim Ausformen des gepressten Pressguts, wenn die Matrize von einer den fertigen Pressling umgebenden Pressstellung in eine den Pressling freigebenden Entnahmestellung verfahren wird.

Weitere Einzelheiten und Vorteile der Erfindung können der folgenden Beschreibung der in den Figuren dargestellten Ausführungsbeispielen entnommen werden.
Fig. 1 ist eine schematische Längsschnittdarstellung einer hydraulischen Presse,
Fig. 2 ist eine schematische Längsschnittdarstellung einer weiteren Ausführungsform einer hydraulischen Presse,
Fig. 3 zeigt eine erfindungsgemäße Kolben-Zylinder-Anordnung in einer Längsschnittansicht, die für den Einsatz in einer Presse, z. B. in einer in den Fig. 1 und 2 gezeigten Presse einsetzbar ist,
Fig. 4 zeigt eine weitere Ausführungsform einer erfindungsgemäßen Kolben-Zylinder-Anordnung in einer Längsschnittdarstellung,
Fig. 5 zeigt eine Längsschnittdarstellung einer nochmals weiteren Ausgestaltung einer erfindungsgemäßen Kolben-Zylinder-Anordnung.
Fig. 6 zeigt einen Teil einer Längsschnittdarstellung einer nochmals weiteren Ausgestaltung einer erfindungsgemäßen Kolben-Zylinder-Anordnung, bei dem eine Feder Teil der erfindungsgemäßen Entlastungseinrichtung ist.

Dabei sind den in den Figuren aufgeführten Komponenten folgende Bezugsnummern zugeordnet:
- 1: Zylinder
- 2: Zylinderrohr
- 3, 3': Zylinderkopf
- 4: Zylinderboden
- 5: Kolben
- 5.1: Kolbenkopf
- 6, 6': Kolbenstange
- 7, 7': Entlastungskolben
- 8, 8': Entlastungsraum
- 9, 9': Unterraum
- 10: Zylinder-Innenraum
- 10.1: (erster) Teilraum (Zylinder-Ringflächenraum)
- 10.2: (zweiter) Teilraum (Zylinder-Kolbenflächenraum)
- 11, 11': Lauffläche
- 11.1: Hülse
- 11.2: (innerer) Teil der Lauffläche
- 11.3: (äußerer) Teil der Lauffläche
- 12,: 12'Anschlagelement
- 13, 13': Verbindungsöffnung (Zylinderanschluss-Ringfläche)
- 14: Wegerfassung-Kolbenposition
- 15, 15': Öffnung (Verbindung Entlastungsraum)
- 16: Verbindungsöffnung (Zylinderanschluss-Kolbenfläche)
- 17: Feder
- 20, 21: Kolben-Zylinder-Anordnung
- 22, 23: Kolben-Zylinder-Anordnung
- 100: hydraulische Presse
- 101: Oberholm
- 102: Unterholm
- 103: Oberstempel
- 104: Unterstempel
- 105: Matrize
- 106: Matrizenwandung
- 107: Verfahrsäule
- 110: gepresster Stein
- 200: hydraulische Presse
- **F_{K}**: Kraftrichtung Kolben
- **F_{H}**: Kraftrichtung Haftreibung
- X: Zylinderachse
- Y: Haupt-Arbeitsachse
- Z: Neben-Arbeitsachse

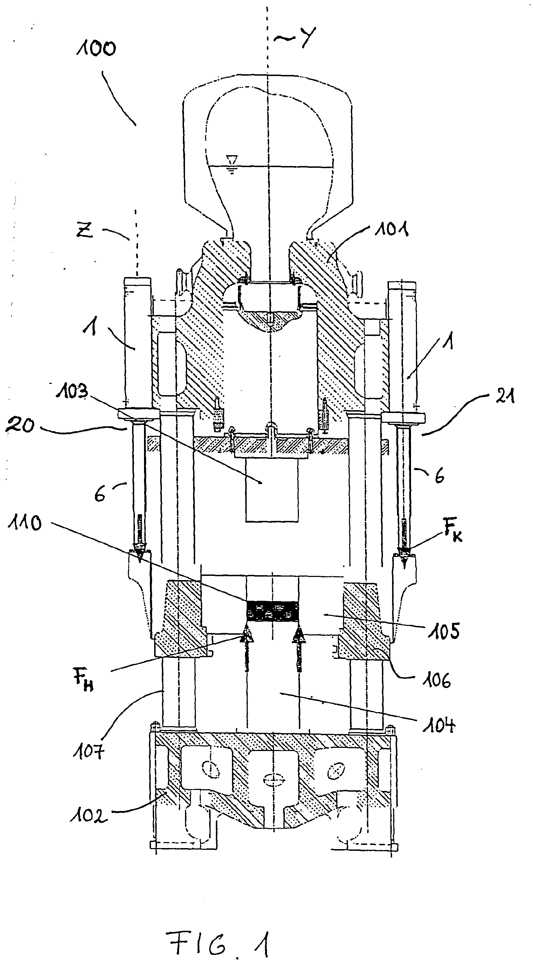

Fig. 1 zeigt eine schematische Längsschnittdarstellung einer hydraulischen Presse 100, bei der mehrere erfindungsgemäße Kolben-Zylinder-Anordnungen 20, 21 in Neben-Arbeitsachsen Z zum Einsatz kommen. Diese hydraulische Presse 100 dient der Erzeugung von gepressten Steinen aus losem Schüttgut. Das Pressen des Schüttguts erfolgt, indem entlang der Haupt-Arbeitsachse Y ein Oberstempel 103 das auf dem Unterstempel 104 lose angeordnete Schüttgut zusammenpresst. In diesem Beispiel ist der Unterstempel 104 fest, und der Oberstempel 103 bewegt sich zum Pressen auf den Unterstempel 104 zu. Es wäre aber auch denkbar, beide Stempel 103, 104 oder nur den Unterstempel 104 zu bewegen. Eine Matrize 105 umgibt das lose Schüttgut und bestimmt teilweise die Form, in die das Schüttgut gepresst werden soll. Die Matrize 105 ist also eine Bildungsform, welche gemäß ihrer Konfiguration die "seitliche" Form der hergestellten gepressten Steine 110 bestimmt. Die Matrize 105 ist fest in eine Matrizenwandung 106 eingelassen, welche in Richtung der Haupt-Arbeitsachse Y entlang mehrerer Verfahrsäulen 107 verfahrbar ist.

Der in Fig. 1 dargestellte Arbeitspunkt zeigt eine Situation, in der der Pressvorgang bereits erfolgt ist, und der Oberstempel 103 bereits von dem in der Matrize 105 gepressten Stein 110 nach oben zurückgezogen worden ist. Die Presse 100 ist nun bereit für den folgenden Arbeitsschritt, die Ausformung des gepressten Steins 110 aus der Matrize 105. Dazu soll die Matrize 105 durch eine Bewegung in Richtung der Arbeitsachse Y, Z relativ zu dem gepressten Stein 110 verfahren werden. Entgegen einer solchen Verfahrbewegung wirkt die Haftreibungskraft **F_{H}** zwischen Stein 110 und Matrize 105. Diese muss überwunden werden, damit die Verfahrbewegung beginnen kann, und somit lediglich die Gleitreibung zwischen Stein 110 und Matrize 105 der Bewegung entgegenwirkt.

Der Größe der Haftreibungskraft F_{H} kann beträchtlich sein. So arbeiten Pressen 100 wie die in Fig. 1 dargestellte hydraulische Presse im Einsatzgebiet der Feuerfestindustrie im Formgebungsbereich mit Kräften, welche im Größenbereich von 4000 kN bis 36000 kN liegen. Während des Pressvorgangs entstehen entsprechend auch große Kräfte, die quer zur Richtung der Haupt-Arbeitsachse Y auf die seitlichen Begrenzungsflächen der Matrize 105 einwirken, also das lose Schüttgut mit sehr hohen Kräften gegen die Matrizenwände presst.

Bei dem in Fig. 1 gezeigten Ausführungsbeispiel erfolgt das Verfahren der Matrizenwandung 106 bzw. der Matrize 105 durch Kolben-Zylinder-Anordnungen 20, 21, deren Zylinder 1 am Oberholm 101 der hydraulischen Presse 100 befestigt sind. Durch Druck auf die Kolben 5 der Kolben-Zylinder-Anordnungen 20, 21 wird entlang der Neben-Arbeitsachse Z eine Kraft F_{K} in Kolbenausfahrrichtung (Richtung der ausfahrenden Kolbenstange 6), der Kraftrichtung **F_{K},** auf die Matrizenwandung 106 ausgeübt. Dieser Kraft F_{K} zum Verfahren der Matrizenwandung 106 mitsamt Matrize 105 nach unten wirkt die Haftreibungskraft F_{H} in ihrer Richtung **F_{H}** entgegen, da sich der gepresste Stein 110 auf dem Unterstempel 104 der hydraulischen Presse 100 abstützt, sich also nicht mit der Matrize 105 mitbewegen kann.

In diesem Arbeitsschritt kommen nun die Vorteile der erfindungsgemäßen Kolben-Zylinder-Anordnung 20, 21 zur Geltung. Die Verfahrbewegung der Matrizenwandung 106 setzt nämlich nicht ein, sobald die Kolben-Zylinder-Anordnungen 20, 21 eine Kraft F_{K} auf sie ausüben. Erst wenn die Kraft F_{K} groß genug ist, um die Haftreibungskraft F_{H} zu überwinden, erfolgt in einem Losbrechmoment der schlagartige Übergang von Haftreibung zur Gleitreibung, und die Bewegung setzt ein.

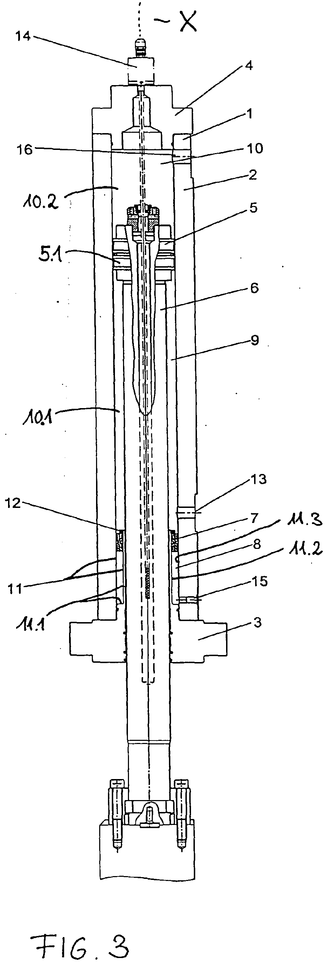

Die Kolben-Zylinder-Anordnungen 20, 21 weisen nun innerhalb des Zylinders 1 Entlastungseinrichtungen auf, die einer bei diesem Losbrechmoment entstehenden Druckerhöhung im Inneren des Zylinders entgegenwirken, wie unten anhand der Fig. 3 noch genauer beschrieben. Auf diese Weise können unerwünschte Schwingungen, die sonst bei dem schlagartigen Losbrechmoment erfolgen würden, verhindert oder zumindest abgeschwächt werden.

In dem in Fig. 1 gezeigten Beispiel erfolgen die Druckerhöhungen in den Kolben-Zylinder-Anordnungen 20, 21 speziell in den Ringflächenräumen (10.1 in Fig. 3). Es könnte aber auch, bei festgehaltener Matrize 105, der Unterstempel 104 durch Relativbewegung gegenüber dem Unterholm 102 der hydraulischen Presse 100 nach oben bewegt werden. In diesem Fall würde der Unterstempel 104 z. B. als Kolben einer erfindungsgemäßen Kolben-Zylinder-Anordnung gestaltet werden.

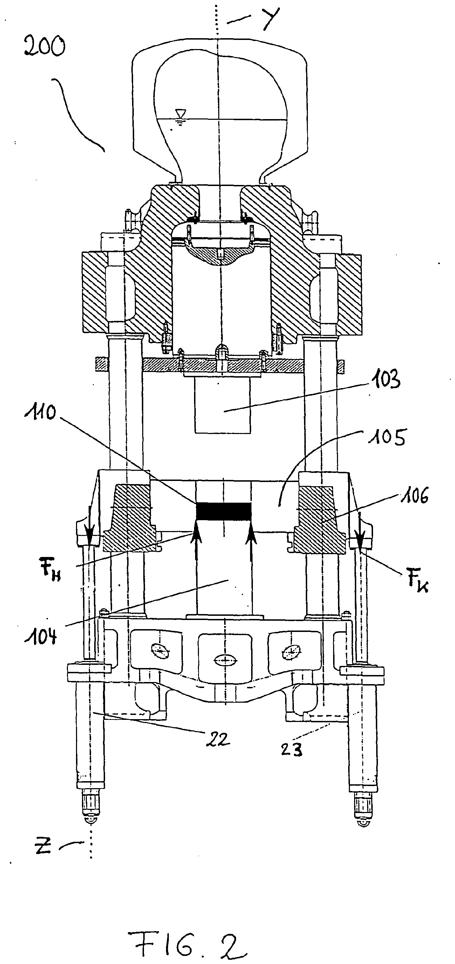

In Fig. 2 ist schematisch eine weitere Ausführungsform einer hydraulischen Presse 200 gezeigt. Der Aufbau dieser hydraulischen Presse 200 ist dem Aufbau der hydraulischen Presse 100 aus Fig. 1 ähnlich, wobei gleiche Einheiten mit den gleichen Bezugsnummern versehen sind. Auch ist der aufgenommene Arbeitspunkt derselbe, der Stein 110 ist bereits gepresst, der Oberstempel 103 zurückgezogen, und die Matrize soll im folgenden als Arbeitsschritt wiederum nach unten bewegt werden.

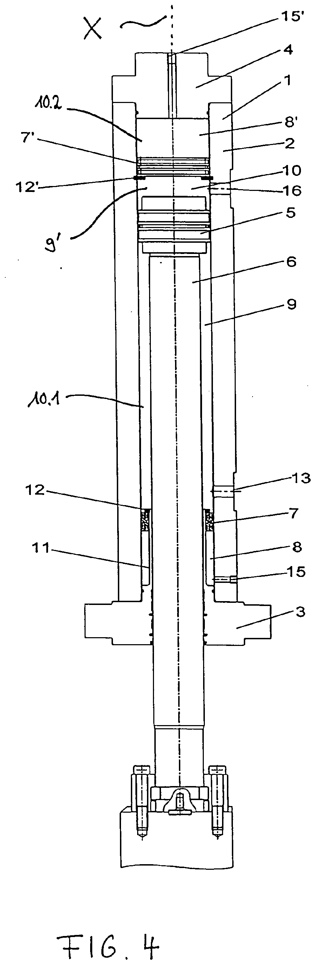

Allerdings sind die Kolben-Zylinder-Anordnungen 22, 23 bei dieser Ausführungsform zylinderseitig am Unterholm 102 der hydraulischen Presse 200 befestigt, und die Matrizenwandung 106 an den Kolbenstangen 6 der Anordnungen. Das Verfahren der Matrize 105 nach unten erfolgt demgemäß durch eine Einfahrbewegung der Kolbenstangen 6 in die Zylinder 1 der Kolben-Zylinder-Anordnungen 22, 23. Bei einer solchen Ausgestaltung wird die Druckerhöhung beim Losbrechmoment nun nicht mehr in dem sich im Ringflächenraum (10.1 in Fig. 4) der Kolben-Zylinder-Anordnungen 22, 23 befindlichen Fluid erzeugt, sondern in dem im Kolbenflächenraum (10.2 in Fig. 4) aufgenommenen Fluid. Dementsprechend sind bei diesen Kolben-Zylinder-Anordnungen 22, 23 Entlastungseinrichtungen mindestens auch kolbenflächenseitig vorgesehen, eine genauere Beschreibung der entsprechenden Anordnung ist weiter unten bei der Beschreibung der Fig. 4 zu finden.

Des weiteren können bei dieser in Fig. 2 gezeigten Ausgestaltung der hydraulischen Presse 200 die Kolben-Zylinder-Anordnungen 22, 23 auch in einer Doppelfunktion als Beine für die hydraulische Presse 200 verwendet werden. Weiterhin kann daran gedacht werden, die Ausgestaltungen der in den Fig. 1 und 2 gezeigten hydraulischen Pressen zu kombinieren, so dass die Matrizenwandung 106 sowohl von Kolben-Zylinder-Anordnungen 22, 23 nach unten gezogen, als auch von Kolben-Zylinder-Anordnungen 20, 21 nach unten gedrückt wird. Auch ist es denkbar, den Ausformungsvorgang durch eine Matrizenbewegung nach oben erfolgen zu lassen. Dies würde dann einen Ausfahrvorgang der am Unterholm der Presse befestigten Kolben-Zylinder-Anordnung 22, 23 und/oder durch ein Einfahren der Kolbenstangen 6 von am Oberholm 101 befestigten Kolben-Zylinder-Anordnung 20, 21 erfolgen. Selbstverständlich kann in einem solchen Fall, dass sich die Matrize 105 beim Ausformvorgang relativ gegenüber dem gepressten Stein 110 nach oben bewegt, auch der Oberstempel 103 bei festgehaltener Matrize 105 nach unten verfahren werden. Dann würde man den Oberstempel 103 z. B. als Kolben einer in der Haupt-Arbeitsachse Y eingesetzten erfindungsgemäßen Kolben-Zylinder-Anordnung einsetzen. Es können auch die Anbindungspunkte der Kolben-Zylinder-Anordnung an die Presse umgedreht sein, d.h. die eben erläuterten Vorgänge sind ebenfalls möglich, wenn nicht das Zylinderrohr fest mit dem Oberholm 101 verbunden ist und sich der Kolben mit der Kolbenstange 6 bewegt, sondern auch, wenn die Kolbenstange 6 und der Kolben fest mit dem Oberholm 101 verbunden ist und sich das Zylinderrohr bewegt.

Anhand von Fig. 3 wird nun eine bevorzugte Ausgestaltung einer erfindungsgemäßen Kolben-Zylinder-Anordnung beschrieben, wie sie z. B. als Nebenzylinder 21, 22 für die Neben-Arbeitsachse Z einer in Fig. 1 beschriebenen hydraulischen Presse eingesetzt wird. Dabei zeigt Fig. 3 einen Längsschnitt entlang der Zylinderachse X des Zylinders 1 der Kolben-Zylinder-Anordnung. Der Zylinder 1 ist von Zylinderwänden umschlossen, welche aus dem Zylinderrohr 2, dem Zylinderkopf 3 und dem Zylinderboden 4 bestehen. Vollständig im Innenraum des Zylinders 1 befindet sich der Kolbenkopf 5.1 eines Kolbens 5, dessen Kolbenstange 6 sich entlang der Zylinderachse X erstreckt und den Zylinderkopf 3 durchgreift. An dem dem Kolbenkopf 5.1 entgegengesetzten Kolbenstangenende ist flanschartig eine Befestigungseinrichtung angebracht, über die die Kolbenstange 6 mittels geeigneter Befestigungsmittel wie z. B. Schraubbolzen, wie in Fig. 3 gezeigt, an einem weiteren Pressenteil befestigt ist. Bei diesem Pressenteil könnte es sich beispielsweise um die Matrize oder Matrizenwandung oder einem mit diesen Teilen verbundenem Teil einer Presse zur Formgebung von losem Schüttgut handeln.

Der Zylinder-Innenraum 10 wird durch den Kopf 5.1 des Kolbens 5 in zwei Teilräume 10.1 und 10.2 unterteilt. Dabei ist in Fig. 3 der Teilraum 10.1 ein Zylinder-Ringflächenraum, und die entsprechende Wirkfläche dieses Teilraums 10.1 ist die Ringfläche, welche sich aus Differenz der Kolben-Innenraumquerschnittsfläche und der Kolbenstangenquerschnittsfläche ergibt. Dabei ist die Querschnittsfläche der Kolbenstange 6 natürlich kleiner als die des Zylinder-Innenraums 10, ansonsten aber unabhängig von ihr realisierbar. Der zweite Teilraum 10.2 oder Zylinder-Kolbenflächenraum hat als Wirkfläche die volle Querschnittsfläche des Zylinder-Innenraums 10.

Sowohl der Zylinder-Ringflächenraum 10.1, als auch der Zylinder-Kolbenflächenraum 10.2 sind mit Zylinderanschlüssen 13 (Ringfläche) bzw. 16 (Kolbenfläche) versehen. Durch diese Öffnungen in der Zylinderwand können Fluide in die Teilräume 10.1 bzw. 10.2 gelangen, und deren Druck kann durch nicht gezeigte an die Zylinderanschlüsse angeschlossene Systeme unabhängig voneinander eingestellt werden. Der Zylinderanschluss Kolbenfläche 16 befindet sich unmittelbar am bodenseitigen Ende des Zylinders, der Zylinderanschluss Ringfläche 13 dagegen um eine bestimmte Länge vom kopfseitigen Ende des Zylinders in Richtung Zylindermitte versetzt. Dennoch befindet sich der Zylinderanschluss Ringfläche 13, wenn der Kolben 5 sich im maximalen Abstand vom Zylinderboden 4 befindet, in der Nähe des kopfseitigen Endes des Kolbenkopfs 5.1 des Kolbens 5. Dies ist bedingt durch eine am kopfseitigen Ende des Zylinders vorgesehenen Entlastungseinrichtung im Teilraum 10.1. Diese Entlastungseinrichtung nimmt einen Bereich des Zylinder-Innenraums 10 in Beschlag, und der Zylinderanschluss Ringfläche 13 ist dementsprechend zur Zylindermitte hin verschoben.

Außerhalb des Zylinders ist auf dem Zylinderboden 4 eine Wegerfassung 14 für die Kolbenposition angeordnet, die in geeigneter Weise an den Kolben 5 gekoppelt ist. Die Wegerfassung 14 dient dazu, die Position des Kolbens 5 zu jedem Zeitpunkt zu erfassen und an eine (nicht gezeigte) Steuerung weiterzugeben. Dabei kann der Zylinderboden 4 eine geeignete Ausnehmung aufweisen, die zur Aufnahme eines auf dem bodenseitigen Ende des Kolbens angebrachten Elements des an die Wegerfassung 14 gekoppelten Wegerfassungssystems dient.

Selbstverständlich weist die Kolben-Zylinder-Anordnung die in Fig. 3 durch schwarze Quadrate angedeuteten notwendigen Ringdichtungen auf, und auch ansonsten entspricht die bis zu diesem Punkt beschriebene Kolben-Zylinder-Anordnung, abgesehen von dem zur Zylindermitte hin versetzten Zylinderanschluss Ringfläche 13, einer gewöhnlichen Kolben-Zylinder-Anordnung mit Wegerfassung der Kolbenposition .

Erfindungsgemäß ist nun eine Entlastungseinrichtung im Innenraum 10 des Zylinders vorgesehen, bei diesem in Fig. 3 gezeigten Ausführungsbeispiel im Zylinder-Ringflächenraum 10.1. Dazu ist der Zylinder-Ringflächenraum 10.1 nochmals unterteilt in einen Unterraum 9, in dem ein Fluid aufgenommen ist, und der dem gesamten Zylinder-Ringflächenraum 10.1 einer herkömmlichen Kolben-Zylinder-Anordnung entspricht, und in einen Entlastungsraum 8 der Entlastungseinrichtung. Der Entlastungsraum 8 nimmt hier einen bezogen auf die Zylinderachse X kurzen Bereich des Zylinder-Ringflächenraums 10.1 in Beschlag, der allerdings in Querschnittsrichtung einen großen Teil der verbleibenden Ringfläche ausmacht. Gegenüber dem Unterraum 9 ist der Entlastungsraum 8 durch einen bewegbar gelagerten Entlastungskolben 7 und eine Hülse 11.1 aus einem geeigneten Material abgetrennt. Entlastungskolben 7 und Hülse 11.1 bilden somit eine Begrenzungsanordnung für den Entlastungsraum 8 bezüglich des Unterraums 9. Der Entlastungsraum 8 befindet sich also zwischen der Zylinderrohrwand 2 und der Hülse 11.1, nach oben, also zum Zylinderboden 4 hin ist der Entlastungsraum 8 durch den in dieser Ausgestaltung mit ringflächenartigem Querschnitt versehenem Entlastungskolben 7 getrennt, und an seinem in Fig. 3 unteren Ende, zum Zylinderkopf (3) hin durch den Zylinderkopf 3 selbst. Radial von der Zylinderachse X nach außen gerichtet ist der Entlastungsraum 8 durch das Zylinderrohr 2 begrenzt.

Grundsätzlich verkürzt der Entlastungsraum 8 durch seine Anordnung innerhalb des Zylinder-Innenraums 10 den Hub der Kolben-Zylinder-Anordnung genau um die Länge, um die er sich von einem Zylinderende zur Zylindermitte hin erstreckt. In der in Fig. 3 gezeigten Ausgestaltung reicht der Entlastungsraum 8 daher bis zum Zylinderkopf 3. Allerdings reicht die Hülse 11.1 des Entlastungsraums 8 noch weiter in Richtung Zylinderrohr 2 vor, indem sie auf Höhe des zylinderkopfseitigen Endes des Entlastungsraums 8 radial gesehen scharf nach außen wegknickt. Durch ein entsprechendes (doppel)-L-förmiges Längsschnittprofil erlangt die Hülse 11.1 des Entlastungsraums 8 eine besondere Stärke und Steife. Der Entlastungsraum 8 stellt also einen weiteren, vom Innenraum 10 des Zylinders 1 abgetrennten und in diesen integrierten torusartigen Zylinder dar.

Der den zum Kolbenkopf 5.1 hin gerichtete Teil der Begrenzungsanordnung des Entlastungsraums 8 darstellende Entlastungskolben 7 ist bewegbar gelagert. Er kann entlang einer Lauffläche 11 der Entlastungseinrichtung in Richtung der Zylinderachse X bewegt werden. In der in Fig. 3 gezeigten Ausgestaltung der Kolben-Zylinder-Anordnung besteht die Lauffläche 11 aus der von der Innenseite des Zylinderrohrs 2 gebildeten äußeren Lauffläche 11.3 und der radial bezüglich der Zylinderachse X gesehenen inneren Lauffläche 11.2, also der Hülse 11.1. Der Entlastungskolben 7 läuft also längs zweier konzentrischer Zylinderrohrwände entlang, welche den Entlastungsraum 8 auch in Richtung quer zur Zylinderachse X begrenzen. Durch den beweglichen Entlastungskolben 7 sind der Unterraum 9 und der Entlastungsraum 8 volumenmäßig aneinander gekoppelt. Eine Bewegung des Entlastungskolbens 7 vom Zylinderboden 4 zum Zylinderkopf 3 hin vergrößert das Volumen des Unterraums 9 und verkleinert das Volumen des Entlastungsraums 8 entsprechend. Umgekehrt bewirkt eine Bewegung des Entlastungskolbens 7 vom Zylinderkopf 3 zum Zylinderboden 4 hin eine Vergrößerung des Entlastungsraums 8 und eine entsprechende Verkleinerung des Unterraums 9. In beiden Fällen bleiben aber Unterraum 9 und Entlastungsraum 8 voneinander getrennt.

An der Hülse 11.1 ist an deren dem Zylinderboden 4 zugewandten Endseite ein Anschlagring 12 befestigt. Dieser ist bezogen auf die Querschnittsfläche gerade so groß, dass er zuverlässig eine Bewegung des Entlastungskolbens 7 zum Zylinderboden 4 hin begrenzt, nämlich sobald die dem Zylinderboden 4 zugewandte Seite des Entlastungskolbens 7 an dem Anschlagring 12 anschlägt. Allerdings darf die Querschnittsfläche des Anschlagsrings höchstens so groß sein, dass noch ein möglichst großer Flächenanteil der dem Zylinderboden 4 und damit dem in dem Unterraum 9 aufgenommenen Fluid zugewandten Seite des Entlastungskolbens 7 in Anschlagstellung nicht abgedeckt ist, d. h. diese Seite des Entlastungskolbens 7 muss in möglichst großflächigen Kontakt mit dem im Unterraum 9 aufgenommenen Fluid stehen. Des weiteren kann der Anschlagring 12 auch die Bewegung des Kolbens 5 in Richtung des Zylinderkopfes 3 begrenzen.

Schließlich ist noch ein Anschluss 15 für den Entlastungsraum 8 vorgesehen, der durch eine Öffnung im Zylinderrohr 2 realisiert ist. Durch diesen Anschluss 15 kann ein sich im Entlastungsraum 8 befindliches Fluid druckbeaufschlagt werden. Die Öffnung kann verschlossen sein, es kann ein Ventil angeschlossen sein oder auch andere Teile, die dann zusammen mit der in dem Innenraum 10 des Zylinders 1 angeordneten Entlastungseinrichtung eine Entlastungsvorrichtung bilden.

Im folgenden wird das Wirken der Entlastungseinrichtung bei entsprechender Druckerhöhung durch eine auf den Teilraum 10.1, den Ringflächenraum gerichtete Bewegung des Kolbens 5 in dem in dem Teilraum 10.1 bzw. Unterraum 9 aufgenommenen Fluid beschrieben. Eine solche Druckerhöhung kann beispielsweise auftreten, wenn die Kolben-Zylinder-Anordnung als Nebenzylinder 20, 21 bei der Neben-Arbeitsachse Z der in Fig. 1 gezeigten hydraulischen Presse auftreten. Eine Ausfahrbewegung des Kolbens 5 und der Kolbenstange 6 aus dem Zylinderrohr 2 sei durch eine Haltekraft F_{H} verhindert, die das aus dem Zylinderrohr 2 ragende Ende der Kolbenstange 6 hält. Zum Überwinden dieser Haltekraft F_{H} ist kolbenseitig eine kritische Kraft F_{c} erforderlich. Sobald diese kritische Kraft F_{c} einmal überwunden ist, steht einer Ausfahrbewegung des Kolbens nicht mehr die Haltekraft F_{H}, sondern eine deutlich geringere Kraft F_{R} entgegen. Zum Erreichen der kritischen Kraft F_{c} ist ein entsprechender kritischer Druck p_{c} im Teilraum 10.2, dem Zylinder-Kolbenflächenraum bzw. in dem darin enthaltenen Fluid erforderlich. Bei Erhöhung des Drucks p im Teilraum 10.2 entsteht ein definiertes Kompressionsvolumen im Teilraum 10.2. Dieses ist durch das Volumen bestimmt, um das das im Teilraum 10.2 enthaltene Fluid den Teilraum 10.2 durch Ausstoßbewegung des Kolbens 5 vergrößern würde, wenn die Haltekraft F_{H} dieser Bewegung nicht entgegenstehen würde.

Kurz bevor bzw. in dem Moment, in dem bei über die Verbindungsöffnung 16 bewirkte Druckerhöhung im Teilraum 10.2 der kritische Druck p_{c} erreicht wird, ist dieses Kompressionsvolumen maximal. Beim Losbrechmoment, also in dem Augenblick, in dem die Haltekraft F_{H} überwunden wird, entspannt sich dieses Kompressionsvolumen schlagartig. Der Kolben 5 wird in einer beschleunigten Bewegung ausgestoßen, und das in dem Teilraum 10.1 bzw. dem Unterraum 9 aufgenommene Fluid erfährt durch die Bewegung des Kolbens 5 eine Druckerhöhung. Durch ein solches schlagartiges Entfesseln des in dem Teilraum 10.2 gespeicherten Drucks stellen die durch die beschleunigte Bewegung des Kolbens 5 im Teilraum 10.1 bzw. Unterraum 9 entstehenden Druckveränderungen einen Nichtgleichgewichtsprozess dar. Eine Zeitspanne τ, in der das schlagartige Losbrechen erfolgt, stellt eine charakteristische Größe dieses hochdynamischen Vorgangs dar. Bei den oben beschriebenen Pressen im Einsatzgebiet der Feuerfestindustrie zur Formgebung von losem Schüttgut kann diese charakteristische Zeitspanne τ 20 ms oder weniger betragen. Ohne die erfindungsgemäße Entlastungseinrichtung würden nun die bereits erläuterten Folgen mitsamt Schwingungsbelastung und Beschädigung der Presse erfolgen.

Diese Folgen können aber mit der erfindungsgemäßen Entlastungseinrichtung verhindert werden. Dies geschieht folgendermaßen. Die Druckerhöhung durch Bewegung des Kolbens 5 entsteht in dem im Unterraum 9 des Teilsraums 10.1 aufgenommenen Fluid. Dieses liegt aber am Entlastungskolben 7 der Entlastungseinrichtung an, und kann die Druckerhöhung unmittelbar an den Entlastungskolben 7 weitergeben. Selbstverständlich wirkt die Druckerhöhung auch über den Zylinderanschluss Ringfläche 13 in das an den Zylinderanschluss Ringfläche 13 angeschlossene Drucksystem. Die diesbezügliche Entlastung erfolgt aber auf größeren Zeitskalen und wird für die folgende Betrachtung nicht mehr berücksichtigt. Die Druckwirkung des in dem Unterraum 9 aufgenommenen Fluids wirkt dagegen auf geringen Zeitskalen in der Größenordnung von τ auf den Entlastungskolben 7 der in dem Zylinder-Innenraum 10 integrierten Entlastungseinrichtung.

Der Entlastungsraum 8 der Entlastungseinrichtung ist in dieser Ausführungsform mit einem Gas, z. B. Stickstoff, gefüllt. Das Gas bildet also bei dieser Ausgestaltung ein Entlastungsfluid. Das Gas im Entlastungsraum 8 steht dabei unter einem Druck, der zumindest dem Druck des in dem Unterraum 9 aufgenommenen Fluids vor der durch den Kolben 5 bewirkten Druckerhöhung entspricht, der Entlastungskolben 7 befindet sich also am Anschlagsring 12 und das Volumen des Entlastungsraums 8 ist vor dem Losbrechen maximal.

Als Folge der schlagartigen Druckeinwirkung des Fluids im Unterraum 9 auf den Entlastungskolben 7 wird auch der Entlastungskolben 7 zu einer Bewegung gezwungen, welche das Volumen des Unterraums 9 erhöht und das des Entlastungsraums 8 verringert. Mit der Vergrößerung des Unterraums 9 ist aber eine Druckentlastung des in dem Unterraum 9 aufgenommenen Fluids verbunden. Diese Druckentlastung verringert also den durch die Bewegung des Kolbens 5 in dem Fluid im Unterraum 9 bewirktem erhöhten Druck, und wirkt so der Druckerhöhung entgegen.

Der dynamische detaillierte Ablauf diese Druckentlastung hängt natürlich von mehreren Faktoren wie der volumenmäßigen Größenverhältnisse, der unterschiedlichen Teilräume, des Zeitintervalls τ, der konstruktionsbedingten Ansprechzeit der Entlastungseinrichtung, den Drücken und Druckunterschieden im Entlastungsraum 8 und im Unterraum 9 usw. ab. Allerdings ist das Prinzip der Druckentlastung durch das Entgegenwirken gegen die Druckerhöhung noch im Zylinder-Innenraum 10 unabhängig von den o. g. Faktoren. Dem die Druckerhöhung erleidenden Fluid im Unterraum 9 wird ebenfalls schlagartig, mit entsprechend kurzen Ansprechzeiten eine Vergrößerung des Unterraums 9 zur Entlastung ermöglicht. Durch die in den Zylinder-Innenraum 10 integrierte Entlastungseinrichtung wird einerseits eine Druckstossweglänge verringert, was zu relativ kurzen Ansprechzeiten führt, andererseits gelingt eine Entlastung ohne durch Verrohrung bedingten Leitungswiderstand.

Die Größe, Anzahl und Anordnung solcher erfindungsgemäßer Entlastungseinrichtungen können baulich variiert sein. So muss sich der Entlastungsraum nicht entlang der gesamten Ringfläche erstrecken. Es könnten auch eine oder mehrere Entlastungsräume mit kreissektormäßigem Querschnitt vorgesehen sein. Die den Entlastungsraum 8 radial zur Zylinderachse X hin begrenzende Hülse 11.1 kann auch durch die Kolbenstange 6 ersetzt werden. In diesem Fall dienen sich Kolbenstange 6 und Entlastungskolben 7 gegenseitig als Lauffläche. Das Anschlagelement 12 wäre dann an dem Zylinderrohr 2 befestigt. Überhaupt könnte das Anschlagelement verschieden geformt sein und z. B. statt an der Begrenzungsfläche am Zylinderrohr befestigt sein. Es muss auch kein voller Ring sein, sondern könnte z.B. in der Form von mehreren Abschlagelementen flanschartig vom Zylinderrohr nach innen in den Teilraum 10.1 hineinragen, wobei natürlich die oben erläuterte Funktionalität gewährleistet bleiben muss.

In dem Ausführungsbeispiel in Fig. 3 ist an den Anschluss 15 des Entlastungsraums 8 ein Gasventil angeschlossen, und der Entlastungsraum 8 ist mit Gas gefüllt. Es ist vorgesehen, jedoch nicht zwingend notwendig, dass der Gasdruck im Entlastungsraum 8 von außen gesteuert werden kann. Dies kann durch ein Steuersystem das an den Anschluss des Entlastungsraums 8 angeschlossen ist, geschehen, aber auch durch (nicht gezeigte) Zusatzvolumen, die an dem Anschluss angebracht sind. Durch Erhöhung des Gesamtvolumens des Entlastungsraums 8 auf Entlastungsraum 8 und Zusatzvolumen kann der Gasdruck im Entlastungsraum 8 vermindert werden. Entsprechend kann durch Wahl von unterschiedlich großen Zusatzvolumen der Druck im Entlastungsraum variiert werden.

In Fig. 4 ist eine weitere Ausgestaltung einer erfindungsgemäßen Kolben-Zylinder-Anordnung in einem Längsschnitt zu sehen. Diese Ausgestaltung unterscheidet sich von der in Fig. 3 gezeigten dadurch, dass auch im Teilraum 10.2, dem Zylinder-Kolbenflächenraum eine Entlastungseinrichtung angeordnet ist. Da auf dieser Seite des Zylinder-Innenraums 10 keine Kolbenstange 6 aufgenommen ist, kann der Entlastungsraum 8' über den vollen Querschnitt des Zylinder-Innenraums ausgestreckt sein. So wird ein maximales Entlastungsvolumen 8' bei nur geringfügig verkleinertem Hub der Kolben-Zylinder-Anordnung erreicht. Der kolbenflächenseitige Entlastungskolben 7' hat hier den gleichen Querschnitt wie der Kopf 5.1 des Kolbens 5, nämlich den gesamten Querschnitt des Zylinder-Innenraums 10. Der Anschlagring 12' auf der Kolbenflächenseite ist hier direkt am Zylinderrohr 2 befestigt.

Wie auch schon in Fig. 1 gezeigten Ausführungsform dient der Anschlagring 12' sowohl zur Begrenzung der auf den Kopf des Kolbens 5 gerichteten Bewegung des Entlastungskolbens 7', als auch zur Begrenzung des Kolbens 5 bezüglich einer Bewegung auf den Zylinderboden 4 zu. Der Zylinderanschluss-Kolbenfläche 16 ist um die Länge, um die der Entlastungsraum 8' in den Zylinderinnenraum 10 bzw. den Teilraum 10.2 hineinragt, in Richtung Zylindermitte verschoben. Der Anschluss 15' an den Entlastungsraum 8' ist in dieser Ausgestaltung durch den Zylinderboden 4 gelegt, er könnte aber auch genauso gut wie der Anschluss 15 des Entlastungsraums 8 zur Seite durch das Zylinderrohr 2 geführt werden. Allerdings ist die Anordnung des Anschlusses 15' entlang der Zylinderachse 6 zweckmäßig, da der Leitungswiderstand eines eventuell an den Anschluss 15' angeschlossenen Leitungssystems gegenüber einem quer zur Zylinderachse X ausgelegten Anschluss verringert ist.

Die in Fig. 4 dargestellte Kolben-Zylinder-Anordnung mit einer Entlastungseinrichtung sowohl auf der Kolbenflächen- als auch auf der Ringflächenseite sorgt dafür, dass sowohl bei durch Kolbenausstoßung als auch durch Kolbeneinzug bewirkter Druckänderung in den entsprechenden Fluiden in den entsprechenden Teil- bzw. Unterräumen eine Druckentlastung stattfinden kann. Eine solche Kolben-Zylinder-Anordnung ist also sensibel gegenüber Druckerhöhungen in beiden Wirkrichtungen, die Kolbenausstoßung und Kolbeneinzug entsprechen, und kann z. B. als Nebenzylinder 22, 23 der in Fig. 2 dargestellten hydraulischen Presse verwendet werden.

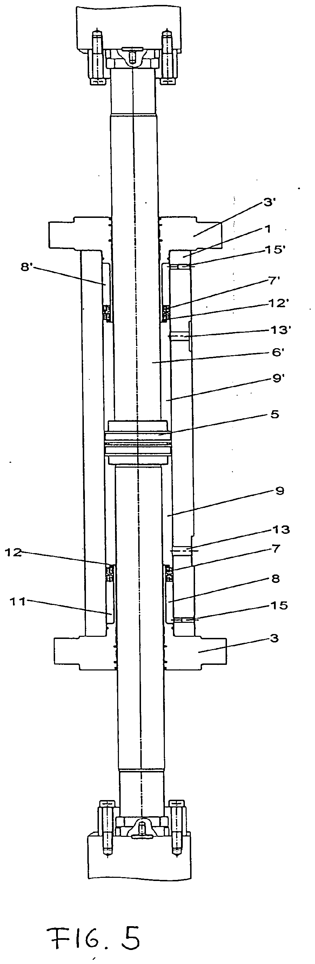

Eine erfindungsgemäße Entlastungseinrichtung für eine Kolben-Zylinder-Anordnung kann auch ein oder beidseitig in einen Gleichgangzylinder eingebaut sein. So ist z.B. in Fig. 5 eine solche beidseitige Anordnung dargestellt. In dieser Ausgestaltung weist der Kolben 5 zwei Kolbenstangen 6, 6' auf, und an der dem Zylinderkopf 3 gegenüberliegenden Ende des Zylinders 1 ist ein weiterer Zylinderkopf 3' angeordnet, der von der Kolbenstange 6' durchdrungen wird. Der Teilraum 10.2 ist somit auch als Ringflächenraum gestaltet und weist einen Unterraum 9' auf, in dem ein Fluid aufgenommen ist. Der Unterraum 9' ist analog der auf der anderen Seite des Kolbenkopfes 5.1 angeordneten Einrichtungen mit einer Zylinderanschluss Ringfläche 13' versehen. Die Entlastungseinrichtung in dem weiteren Zylinder-Ringflächenraum 10.2 ist bei dieser Ausgestaltung in vollkommener Analogie zur ersten Entlastungseinrichtung im Teilraum 10.1 gestaltet, und daher aufgebaut, wie in der Beschreibung zu Fig. 3 ausführlich erläutert. Es ist also ein Entlastungsraum 8' analog dem Entlastungsraum 8 ausgebildet, der an einer Lauffläche 11' längs der Zylinderachse X begrenzt wird und von einem beweglich gelagerten Entlastungskolben 7' in Richtung der Zylinderachse X abgeschlossen ist. Auch ist ein Anschlagring 12' vorgesehen, sowie einen Anschluss 15' für den Entlastungsraum 8'.

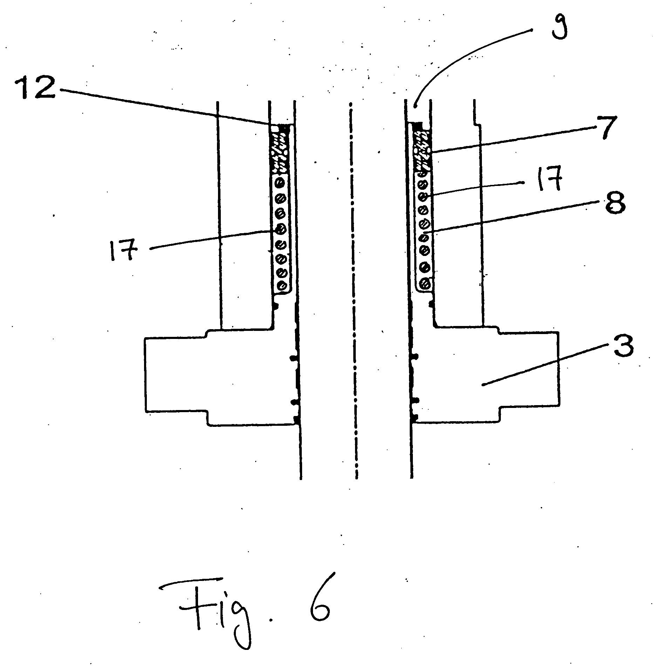

Fig. 6 zeigt schließlich noch einen Teil eines Längsschnitts durch eine weitere Ausführungsform einer erfindungsgemäßen Kolben-Zylinder-Anordnung, bei der im Entlastungsraum 8 eine Ringfeder 17 angeordnet ist. Man erkennt, daß bei einer Druckspitze im Unterraum 9 eine Druckentlastung durch ein Zusammenstauchen der Ringfeder 17 erfolgt. Diese in Fig. 6 gezeigte Ausführungsform ist baulich besonders einfach zu realisieren. Je nach erforderlicher Verwendung können Ringfedern mit unterschiedlichen Kraft-Weg-Charakteristiken zum Einsatz kommen.

Die Erfindung ist nicht auf die in den Figuren erläuterten Ausführungsbeispiele beschränkt. Es ist vielmehr daran gedacht, die beleuchteten Beispiele der Erfindung einzeln und in ihren möglichen Kombinationen im Rahmen der Definition der Ansprüchen zu realisieren. Auch sollen hydraulische Pressen, bei denen erfindungsgemäße Kolben-Zylinder-Anordnungen eingesetzt werden, ausdrücklich Bestandteil dieser Erfindung sein.

## Patentansprüche

1. Kolben-Zylinder-Anordnung für eine Presse mit
einem zumindest teilweise in einem Zylinder (1) aufgenommenen und den Zylinder-Innenraum (10) längs der Zylinderachse (X) in zwei Teilräume (10.1, 10.2) unterteilenden Kolben (5) und
einer in mindestens einem ersten Teilraum (10.1) angeordneten Entlastungseinrichtung, welche ausgelegt ist, einer durch eine längs der Zylinderachse (X) auf den ersten Teilraum (10.1) gerichtete Bewegung des Kolbens (5) bewirkten Druckerhöhung eines in dem ersten Teilraum (10.1) aufgenommenen Fluids entgegen zu wirken, und einen Entlastungsraum (8) sowie eine den Entlastungsraum (8) von einem das aufgenommene Fluid enthaltenden Unterraum (9) des Teilraums (10.1) abgrenzende Begrenzungsanordnung aufweist, wobei
zumindest ein Teilbereich der Begrenzungsanordnung derart gebildet ist, dass infolge der Druckerhöhung des Fluids der Unterraum (9) volumenmäßig vergrößert und der Entlastungsraum (8) volumenmäßig verkleinert wird, wobei eine räumliche Trennung zwischen Unterraum (9) und Entlastungsraum (8) aufrechterhalten bleibt, wozu die Entlastungseinrichtung in dem Teilbereich der Begrenzungsanordnung einen bezüglich dem Zylinder (1) bewegbar gelagerten Entlastungskolben (7) aufweist,
**dadurch gekennzeichnet, dass** die Entlastungseinrichtung ausgelegt ist, der Druckerhöhung entgegen zu wirken, wenn die die Druckerhöhung bewirkende Kolbenbewegung auf eine nach schlagartigem Überwinden eines den Kolben haltenden Widerstands in sehr kurzer Zeit erfolgende Entspannung eines in dem zweiten Teilraum (10.2) durch Druckaufbau in dem darin enthaltenen Fluid vor Überwindung des Haltewiderstands gebildeten Kompressionsvolumens zurückzuführen ist,
wobei der Entlastungskolben (7) bei einer Bewegung entlang einer Lauffläche (11) der Entlastungseinrichtung läuft, so dass der Druckerhöhung bereits am Ort ihrer Entstehung entgegengewirkt werden kann, wobei
eine am Zylinderkopf (3) angebrachte und in den Zylinder-Innenraum (10) ragende Hülse (11.1) einen Teil der den in Form eines torusartigen Zylinders ausgebildeten Entlastungsraum abgrenzenden Begrenzungsanordnung bildet und der vorragende Bereich der Hülse (11.1) einen Teil (11.2) der Lauffläche (11) bildet, und wobei
eine das Volumen des Entlastungsraums (8) verkleinernde Bewegung des Entlastungskolbens (7) von dem zweiten, diesen Entlastungskolben (7) nicht enthaltenden Teilraum (10.2) weggerichtet ist.

2. Kolben-Zylinder-Anordnung nach Anspruch 1, **dadurch gekennzeichnet, dass** die Entlastungseinrichtung ein eine das Volumen des Entlastungsraums (8) vergrößernde Bewegung des Entlastungskolbens (7) begrenzendes, insbesondere als Anschlagelement (12) ausgebildetes Element aufweist.

3. Kolben-Zylinder-Anordnung nach einem der Ansprüche 1 oder 2, **dadurch gekennzeichnet, dass** der Entlastungsraum (8) eine durch eine Öffnung (15) in einer Wand (2) des Zylinders (1) verlaufende Verbindung zur Umgebung des Zylinders (1) besitzt.

4. Kolben-Zylinder-Anordnung nach einem der Ansprüche 1 bis 3, **dadurch gekennzeichnet, dass** die Lagerung für den Entlastungskolben (7) eine längs der Zylinderachse (X) verlaufende Bewegung des Entlastungskolbens (7) ermöglicht.

5. Kolben-Zylinder-Anordnung nach einem der vorhergehenden Ansprüche, **dadurch gekennzeichnet, dass** die Entlastungseinrichtung in einem nahe dem entsprechenden längsseitigen Zylinderende gelegenen Bereich des ersten Teilraums (10.1) angeordnet ist.

6. Kolben-Zylinder-Anordnung nach einem der Ansprüche 1 bis 5, **dadurch gekennzeichnet, dass** zumindest ein Teil (11.3) der Lauffläche (11) durch eine Wand (2) des Zylinders (1) gebildet ist.

7. Kolben-Zylinder-Anordnung nach einem der Ansprüche 1 bis 6, **dadurch gekennzeichnet, dass** die Querschnittsfläche des Entlastungsraums (8), bezogen auf die Zylinderachse (X), größer oder gleich 20%, bevorzugt größer 50% und besonders bevorzugt größer 80% der Querschnittsfläche des Zylinder-Innenraums (10) ist.

8. Kolben-Zylinder-Anordnung nach einem der Ansprüche 1 bis 7, **dadurch gekennzeichnet, dass** die Querschnittsfläche des Entlastungsraums (8), bezogen auf die Zylinderachse (X), im Bereich von 1 bis 20%, bevorzugt 1 bis 10% und besonders bevorzugt 1 bis 5% der Querschnittsfläche des Zylinder-Innenraums (10) liegt.

9. Kolben-Zylinder-Anordnung nach einem der Ansprüche 3 bis 8, **dadurch gekennzeichnet, dass** an die Öffnung (15) eine Versorgungsleitung und/oder ein Ventil und/oder ein Druckmesser angeschlossen ist.

10. Kolben-Zylinder-Anordnung nach einem der Ansprüche 3 bis 9, **dadurch gekennzeichnet, dass** an die Öffnung (15) ein das Gesamtfassungsvermögen des Entlastungsraums vergrößerndes Zusatzvolumen angeschlossen ist.

11. Kolben-Zylinder-Anordnung nach einem der Ansprüche 1 bis 10, **dadurch gekennzeichnet, dass** der Entlastungsraum (8) mit einem mit einem insbesondere über die Öffnung (15) einstellbaren Gegendruck beaufschlagten Entlastungsfluid gefüllt ist, wobei der Gegendruck insbesondere mindestens so hoch ist wie der im Unterraum (9) in dem Fluid herrschende Druck in einem vor der bewirkten Druckerhöhung bestehenden Betriebszustand.

12. Kolben-Zylinder-Anordnung nach Anspruch 11, **dadurch gekennzeichnet, dass** der Gegendruck des Entlastungsfluids um einen vorbestimmten Wert höher als der im Unterraum (9) in dem Fluid herrschende Druck in einem vor der bewirkten Druckerhöhung bestehenden Betriebszustand ist.

13. Kolben-Zylinder-Anordnung nach einem der Ansprüche 11 bis 12, **dadurch gekennzeichnet, dass** das Entlastungsfluid eine hohe und insbesondere höhere Kompressibilität als das in dem Teilraum (10.1)/Unterraum (9) aufgenommene Fluid aufweist.

14. Kolben-Zylinder-Anordnung nach einem der Ansprüche 11 bis 13, **dadurch gekennzeichnet dass** es sich bei dem Entlastungsfluid um ein Gas handelt.

15. Kolben-Zylinder-Anordnung nach einem der Ansprüche 1 bis 14, **dadurch gekennzeichnet, dass** in dem Entlastungsraum (8) eine Vorspanneinrichtung angeordnet ist, deren Vorspannung insbesondere mindestens so groß ist, dass der der Vorspannung entsprechende Gegendruck mindestens so hoch ist wie der im Unterraum (9) in dem Fluid herrschende Druck in einem vor der bewirkten Druckerhöhung bestehenden Betriebszustand.

16. Kolben-Zylinder-Anordnung nach Anspruch 15, **dadurch gekennzeichnet, dass** der Gegendruck der Vorspanneinrichtung um einen vorbestimmten Wert höher als der im Unterraum (9) in dem Fluid herrschende Druck in einem vor der bewirkten Druckerhöhung bestehenden Betriebszustand ist.

17. Kolben-Zylinder-Anordnung nach Anspruch 15 oder 16, **dadurch gekennzeichnet, dass** es sich bei der Vorspanneinrichtung um eine Feder (17) handelt.

18. Kolben-Zylinder-Anordnung nach einem der Ansprüche 15 bis 17, **dadurch gekennzeichnet, dass** eine Begrenzungsfläche des Entlastungsraums (8) derart lösbar befestigt ist, dass durch ein Lösen der Begrenzungsfläche ein Zugang zu und/oder Austausch der Vorspanneinrichtung gegen eine weitere Vorspanneinrichtung mit insbesondere anderer Vorspann-Charakteristik ermöglicht ist.

19. Kolben-Zylinder-Anordnung nach einem der vorhergehenden Ansprüche, bei der in beiden Teilräumen (10.1, 10.2) mindestens eine Entlastungseinrichtung angeordnet ist.

20. Kolben-Zylinder-Anordnung nach einem der vorhergehenden Ansprüche, bei der mindestens einer der Teilräume (10.1, 10.2) insbesondere im Bereich des das Fluid enthaltenden Unterraums (9, 9') eine durch eine Versorgungsöffnung (13, 16) in der Zylinderwand (2) verlaufende Verbindung zur Umgebung des Zylinders (1) aufweist, und/oder ein Wegerfassungssystem (14) für die Kolbenposition vorgesehen ist.

21. Kolben-Zylinder-Anordnung nach einem der vorhergehenden Ansprüche, **dadurch gekennzeichnet, dass** sie als Gleichgangzylinder ausgelegt ist, und der Kolben (5) zwei Kolbenstangen (6, 6') aufweist, welche die Zylinderköpfe (3, 3') des Zylinders (1) durchdringen.

22. Hydraulische Presse (100), insbesondere zur Herstellung von für die Feuerfestindustrie geeigneten Steinen (110) aus losem Schüttgut, bei der mindestens eine Kolben-Zylinder-Anordnung (20, 21) nach einem der Ansprüche 1 bis 21 vorgesehen ist.

23. Hydraulische Presse nach Anspruch 22, bei der die mindestens eine Kolben-Zylinder-Anordnung bei einer Haupt-Arbeitsachse (Y) der Presse eingesetzt wird.

24. Hydraulische Presse nach Anspruch 22 oder 23, bei der die mindestens eine Kolben-Zylinder-Anordnung (20, 21) bei einer Neben-Arbeitsachse (Z) eingesetzt wird, insbesondere zum Verfahren einer der Formgebung eines Pressguts dienenden Matrize (105) aus einer das gepresste Pressgut (110) umgebenden Pressstellung in eine das gepresste Pressgut (110) freigebende Entnahmestellung.

## Claims

1. A piston-cylinder arrangement for a press comprising:
a piston (5) which is at least partially accommodated in a cylinder (1) and divides the cylinder interior (10) along the cylinder axis (X) into two subchambers (10.1, 10.2), and
a pressure relief device which is arranged in at least one first subchamber (10.1) and is adapted to counteract an increase in the pressure of a fluid accommodated in the first subchamber (10.1) caused by a movement of the piston (5) directed along the cylinder axis (X) onto the first subchamber (10.1), and has a relief space (8) and a limiting arrangement which delimits the relief space (8) from a subspace (9) of the subchamber (10.1) which contains the accommodated fluid, wherein
at least one partial region of the limiting arrangement is formed in such a way that, as a result of the pressure increase of the fluid, the subspace (9) is increased in volume and the relief space (8) is reduced in volume, a spatial separation between the subspace (9) and the relief space (8) being maintained, for which purpose the pressure relief device has, in the partial region of the limiting arrangement, a pressure relief piston (7) which is mounted movably with respect to the cylinder (1),
**characterised in that** the pressure relief device is adapted to counteract the increase in pressure when the movement of the piston causing the pressure increase results from a release, produced shortly before overcoming a piston-holding resistance in abrupt fashion, of a compression volume formed in the second subchamber (10.2) by pressure build-up in the fluid contained therein before overcoming the holding resistance,
wherein the pressure relief piston (7) runs along a running surface (11) of the pressure relief device during a movement, so that the pressure increase can be counteracted already at the point where it arises, wherein
a sleeve (11.1) mounted on the cylinder head (3) and projecting into the cylinder interior (10) forms part of the limiting arrangement delimiting the relief space formed in the form of a toroidal cylinder, and the projecting region of the sleeve (11.1) forms part (11.2) of the running surface (11), and wherein
a movement of the pressure relief piston (7) which reduces the volume of the relief space (8) is directed away from the second subchamber (10.2) which does not contain this pressure relief piston (7).

2. The piston-cylinder arrangement according to claim 1, **characterised in that** the pressure relief device has an element limiting a movement of the pressure relief piston (7) which increases the volume of the relief space (8), in particular an element formed as a stop element (12).

3. The piston-cylinder arrangement according to one of claims 1 and 2, **characterised in that** the relief space (8) is connected to the surroundings of the cylinder (1) through an opening (15) in a wall (2) of the cylinder (1).

4. The piston-cylinder arrangement according to one of claims 1 to 3, **characterised in that** the mounting of the pressure relief piston (7) enables the pressure relief piston (7) to move along the cylinder axis (X).

5. The piston-cylinder arrangement according to one of the preceding claims, **characterised in that** the pressure relief device is arranged in a region of the first subchamber (10.1) located near the corresponding longitudinal cylinder end.

6. The piston-cylinder arrangement according to one of claims 1 to 5, **characterised in that** at least a part (11.3) of the running surface (11) is formed by a wall (2) of the cylinder (1).

7. The piston-cylinder arrangement according to one of claims 1 to 6, **characterised in that** the cross-sectional area of the relief space (8), relative to the cylinder axis (X), is greater than or equal to 20%, preferably greater than 50% and most preferably greater than 80% of the cross-sectional area of the cylinder interior (10).

8. The piston-cylinder arrangement according to one of claims 1 to 7, **characterised in that** the cross-sectional area of the relief space (8), relative to the cylinder axis (X), lies in the range from 1 to 20%, preferably 1 to 10% and most preferably 1 to 5% of the cross-sectional area of the cylinder interior (10).

9. The piston-cylinder arrangement according to one of claims 3 to 8, **characterised in that** a supply line and/or a valve and/or a pressure gauge is connected to the opening (15).

10. The piston-cylinder arrangement according to one of claims 3 to 9, **characterised in that** an additional volume increasing the total capacity of the relief space is connected to the opening (15).

11. The piston-cylinder arrangement according to one of claims 1 to 10, **characterised in that** the relief space (8) is filled with a relief fluid to which a counter-pressure, in particular adjustable via the opening (15), is applied, the counter-pressure being in particular at least as high as the pressure prevailing in the subspace (9) in the fluid in an operating state prior to the pressure increase effected.

12. The piston-cylinder arrangement according to claim 11, **characterised in that** the counter-pressure of the relief fluid is higher by a predetermined value than the pressure prevailing in the subspace (9) in the fluid in an operating state prior to the pressure increase effected.

13. The piston-cylinder arrangement according to one of claims 11 and 12, **characterised in that** the relief fluid has a high and in particular higher compressibility than the fluid housed in the subchamber (10.1)/subspace (9).

14. The piston-cylinder arrangement according to any of claims 11 to 13, **characterised in that** the relief fluid is a gas.

15. The piston-cylinder arrangement according to one of claims 1 to 14, **characterised in that** a prestressing device is arranged in the relief space (8), the prestressing of which is in particular at least so great that the counter-pressure corresponding to the prestressing is at least as high as the pressure prevailing in the subspace (9) in the fluid in an operating state prior to the pressure increase effected.

16. The piston-cylinder arrangement according to claim 15, **characterised in that** the counter-pressure of the prestressing device is higher by a predetermined value than the pressure prevailing in the subspace (9) in the fluid in an operating state prior to the pressure increase effected.

17. The piston-cylinder arrangement according to claim 15 or 16, **characterised in that** the prestressing device is a spring (17).

18. The piston-cylinder arrangement according to one of the claims 15 to 17, **characterised in that** a boundary surface of the relief space (8) is detachably fastened in such a way that access to and/or exchange of the prestressing device for another prestressing device with, in particular, a different prestressing characteristic is made possible by detaching the boundary surface.

19. The piston-cylinder arrangement according to one of the preceding claims, in which at least one pressure relief device is arranged in both partial spaces (10.1, 10.2).

20. The piston-cylinder arrangement according to one of the preceding claims, in which at least one of the subchambers (10.1, 10.2), in particular in the area of the subspace (9, 9') containing the fluid, has a connection to the surroundings of the cylinder (1) running through a supply opening (13, 16) in the cylinder wall (2), and/or a path detection system (14) for the piston position is provided.

21. The piston-cylinder arrangement according to one of the preceding claims, **characterised in that** it is formed as a synchronous cylinder and the piston (5) comprises two piston rods (6, 6') which penetrate the cylinder heads (3, 3') of the cylinder (1).

22. A hydraulic press (100), in particular for producing bricks (110) suitable for the refractory industry from loose bulk material, in which at least one piston-cylinder arrangement (20, 21) according to one of claims 1 to 21 is provided.

23. The hydraulic press according to claim 22, in which the at least one piston-cylinder arrangement is used on a main working axis (Y) of the press.

24. The hydraulic press according to claim 22 or 23, in which the at least one piston-cylinder arrangement (20, 21) is used with a secondary working axis (Z), in particular for moving a die (105) used to shape a material to be pressed from a pressing position surrounding the pressed material to be pressed (110) into a removal position releasing the pressed material to be pressed (110).

## Revendications

1. Vérin pour une presse comportant :
un piston (5) logé au moins partiellement dans un cylindre (1) et subdivisant le volume intérieur (10) du cylindre le long de l'axe du cylindre (X) en deux volumes partiels (10.1, 10.2), et
un dispositif de décharge situé dans au moins un premier volume partiel (10.1) et conçu pour agir à l'encontre d'une augmentation de pression d'un fluide se trouvant dans le premier volume partiel (10.1), provoquée par un déplacement du piston (5) le long de l'axe du cylindre (X) en direction du premier volume partiel (10.1), le dispositif de décharge présentant un espace de décharge (8) ainsi qu'un dispositif de limitation délimitant l'espace de décharge (8) vis-à-vis d'un espace inférieur (9) du volume partiel (10.1) qui contient le fluide reçu ;
au moins une section partielle du dispositif de limitation étant conçue de manière que, suite à l'augmentation de pression du fluide, l'espace inférieur (9) augmente de volume et l'espace de décharge (8) diminue de volume, une séparation spatiale entre l'espace inférieur (9) et l'espace de décharge (8) étant maintenue, le dispositif de décharge présentant à cet effet, dans la section partielle du dispositif de limitation, un piston de décharge (7) disposé mobile par rapport au cylindre (1),
**caractérisé en ce que** le dispositif de décharge est conçu pour agir à l'encontre de l'augmentation de pression lorsque le déplacement du piston à l'origine de l'augmentation de pression est dû à une détente, produite rapidement avant le dépassement abrupte d'une résistance retenant le piston, du volume de compression formé dans le deuxième volume partiel (10.2) par accumulation de pression dans le fluide qu'il contient préalablement au dépassement de la résistance de maintien,
le piston de décharge (7) opérant une course, lors d'un déplacement, le long d'une surface de course (11) du dispositif de décharge, de manière que l'augmentation de pression puisse être contrée à l'endroit même de sa production,
un fourreau (11.1), situé sur la tête de cylindre (3) et pénétrant dans le volume intérieur du cylindre (10), formant une partie du dispositif de limitation délimitant l'espace de décharge en forme de cylindre torique, et la section pénétrante du fourreau (11.1) formant une partie (11.2) de la surface de course (11), et
un déplacement du piston de décharge (7) visant à réduire le volume de l'espace de décharge (8) est dirigé dans le sens inverse du deuxième volume partiel (10.2) ne contenant pas ce piston de décharge (7).

2. Vérin selon la revendication 1, **caractérisé en ce que** le dispositif de décharge présente un élément, notamment conçu sous la forme d'un élément de butée (12), limitant un mouvement du piston de décharge (7) visant à augmenter le volume de l'espace de refoulement (8).

3. Vérin selon l'une des revendications 1 et 2, **caractérisé en ce que** l'espace de décharge (8) est en communication avec l'environnement du cylindre (1) par le biais d'une ouverture (15) pratiquée dans une paroi (2) du cylindre (1).

4. Vérin selon l'une des revendications 1 à 3, **caractérisé en ce que** la disposition du piston de décharge (7) permet un déplacement du piston de décharge (7) le long de l'axe du cylindre (X).

5. Vérin selon l'une des revendications précédentes, **caractérisé en ce que** le dispositif de décharge est agencé dans une zone du premier volume partiel (10.1) située à proximité de l'extrémité longitudinale correspondante du cylindre.

6. Vérin selon l'une des revendications 1 à 5, **caractérisé en ce qu'**au moins une partie (11.3) de la surface de course (11) est formée par une paroi (2) du cylindre (1).

7. Vérin selon l'une des revendications 1 à 6, **caractérisé en ce que** la section transversale de l'espace de décharge (8), par rapport à l'axe du cylindre (X), est supérieure ou égale à 20 %, de préférence supérieure à 50 % et plus préférablement supérieure à 80 % de la section transversale du volume intérieur du cylindre (10).

8. Vérin selon l'une des revendications 1 à 7, **caractérisé en ce que** la section transversale de l'espace de décharge (8), par rapport à l'axe du cylindre (X), fait de 1 à 20 %, de préférence 1 à 10 % et plus préférablement 1 à 5 % de la section transversale du volume intérieur du cylindre (10).

9. Vérin selon l'une des revendications 3 à 8, **caractérisé en ce qu'**une conduite d'amenée et/ou un clapet et/ou un manomètre est branché sur l'ouverture (15).

10. Vérin selon l'une des revendications 3 à 9, **caractérisé en ce qu'**un volume supplémentaire visant à augmenter la capacité globale de l'espace de décharge est branché sur l'ouverture (15).

11. Vérin selon l'une des revendications 1 à 10, **caractérisé en ce que** l'espace de décharge (8) est rempli d'un fluide de décharge soumis à une contre-pression notamment réglable au moyen de l'ouverture (15), ladite contre-pression étant notamment au moins aussi élevée que la pression régnant dans le fluide présent dans l'espace inférieur (9) dans un état de fonctionnement précédent l'augmentation de pression induite.

12. Vérin selon la revendication 11, **caractérisé en ce que** la contre-pression du fluide de décharge est supérieure, d'une valeur prédéterminée, à la pression régnant dans le fluide présent dans l'espace inférieur (9) dans un état de fonctionnement précédent l'augmentation de pression induite.

13. Vérin selon l'une des revendications 11 et 12, **caractérisé en ce que** le fluide de décharge présente une compressibilité élevée, notamment plus élevée que celle du fluide logeant dans le volume partiel (10.1)/l'espace inférieur (9).

14. Vérin selon l'une des revendications 11 à 13, **caractérisé en ce que** le fluide de décharge est un gaz.

15. Vérin selon l'une des revendications 1 à 14 **caractérisé en ce qu'**un dispositif de prétension est disposé dans l'espace de décharge (8), sa prétension étant notamment telle que la contre-pression correspondant à la prétension soit au moins aussi élevée que la pression régnant dans le fluide présent dans l'espace inférieur (9) dans un état de fonctionnement précédent l'augmentation de pression induite.

16. Vérin selon la revendication 15, **caractérisé en ce que** la contre-pression du dispositif de prétension est supérieure, d'une valeur prédéterminée, à la pression régnant dans le fluide présent dans l'espace inférieur (9) dans un état de fonctionnement précédent l'augmentation de pression induite.

17. Vérin selon la revendication 15 ou 16, **caractérisé en ce que** le dispositif de prétension est un ressort (17).

18. Vérin selon l'une des revendications 15 à 17, **caractérisé en ce qu'**une surface de délimitation de l'espace de décharge (8) est fixée amovible de manière que le retrait de la surface de délimitation permette d'accéder au dispositif de prétension et/ou de le changer par un autre dispositif de prétension doté notamment d'autres caractéristiques de prétension.

19. Vérin selon l'une des revendications précédentes, dans lequel au moins un dispositif de décharge est prévu dans les deux volumes partiels (10.1, 10.2).

20. Vérin selon l'une des revendications précédentes, dans lequel au moins un des volumes partiels (10.1, 10.2) présente, notamment à proximité de l'espace inférieur (9, 9') contenant le fluide, un dispositif de communication avec l'environnement du cylindre (1) passant par une ouverture d'amenée (13, 16) pratiquée dans la paroi du cylindre (2), et/ou dans lequel il est prévu un système de détection de course (14) pour la position du piston.

21. Vérin selon l'une des revendications précédentes, **caractérisé en ce qu'**il est conçu sous la forme d'un vérin à double tige, et le piston (5) présente deux tiges de piston (6, 6') traversant les têtes (3, 3') du cylindre (1).

22. Presse hydraulique (100), servant notamment à la production de briques (110) adaptées à l'industrie du réfractaire à partir de matériaux en vrac et dans laquelle il est prévu au moins un vérin (20, 21) selon l'une des revendications 1 à 21.

23. Presse hydraulique selon la revendication 22, dans laquelle l'au moins un vérin est mis en oeuvre selon un axe de travail principal (Y) de la presse.

24. Presse hydraulique selon la revendication 22 ou 23, dans laquelle l'au moins un vérin (20, 21) est mis en oeuvre selon un axe de travail secondaire (Z), notamment pour mouvoir une matrice (105) servant à mettre en forme un produit pressé, d'une position de pression entourant le produit pressé (110) à une position de prélèvement dans laquelle le produit pressé (110) est libéré.
